# EUROPEAN PATENT APPLICATION

(11) **EP 4 622 037 A1**
(43) Date of publication of application: **24.09.2025**
(21) Application number: 23891513.6
(22) Date of filing: 13.11.2023
(51) Int. Cl.: H02J 3/32, H02J 3/00, H02J 3/38, H02J 7/35, H02J 13/00

(54) **POWER OPERATION MANAGEMENT SYSTEM, POWER OPERATION MANAGEMENT DEVICE, AND POWER OPERATION MANAGEMENT METHOD**

(30) Priority: 15.11.2022 JP 2022182272
(71) Applicant: Hitachi, Ltd., Tokyo 100-8280 (JP)
(72) Inventor: SUZUKI, Toshiaki, Tokyo 100-8280 (JP); FURUYA, Kotaro, Tokyo 100-8280 (JP); SAITO, Nao, Tokyo 100-8280 (JP); TAMAYO RUIZ, Efrain Eduardo, Tokyo 100-8280 (JP); ITO, Masaaki, Tokyo 100-8280 (JP); JYOUE, Kazutaka, Tokyo 100-8280 (JP)
(74) Representative: MERH-IP Matias Erny Reichl Hoffmann Patentanwälte PartG mbB
(86) International application number: PCT/JP2023/040701
(87) International publication number: WO 2024/106366

(57) **Abstract**

Provided is electric-power management administration system and the like which are capable of reducing electric power losses involved in charging and discharging. An electric-power management administration system (100) includes an electric-power management administration device (70) adapted to administer charging/discharging of a first charging/discharging system (30) and a second charging/discharging system (40), wherein the first charging/discharging system (30) and the second charging/discharging system (40) is each connected to a first electric-power supply system (10) and a second electric-power supply system (20) through an electric-power network and is each connected to a first electric-power demand system (50) and a second electric-power demand system (60), the plurality of charging/discharging systems includes charging/discharging systems having different charging/discharging efficiencies, the plurality of electric-power supply systems includes electric-power supply systems having different electric-power generation schemes, and
the electric-power management administration device (70) sets a charging/discharging plan for the respective charging/discharging systems, based on the charging/discharging efficiencies, and based on priorities for improving electric-power efficiency, which are associated with the electric-power generation schemes.

## Description

### Technical Field

The present invention relates to electric-power management administration systems and the like.

### Background Art

As techniques for administering management of electric power, for example, techniques described in Patent Literatures 1 to 3 are known. That is, Patent Literature 1 describes "a first electric-power derivation determination unit reads out information about an amount of supply which is stored in an amount-of-supply database •••, reads out information about an amount of demand •••, and determines the derivation of electric power supplied to each office E".

Further, Patent Literature 2 describes "on the assumption that the plurality of electric-power supply resources are connected to each of electric-power demand resources through individual virtual electric-power supply paths, an integrated value of virtual electric energy per unit time is calculated for each of the virtual electric-power supply paths".

Further, Patent Literature 3 describes "creating tracking information indicating a charging rate of charged electricity derived from renewable energy in an electricity charging device, and a charging rate of charged electricity derived from purchased electric power, out of the charging rate in the electricity charging device".

### Citation List

### Patent Literature

PTL1: JP 2021-174336 A
PTL2: JP 2018-196257 A
PTL3: JP 2022-7988 A

### Summary of Invention

### Technical Problem

Patent Literatures 1 to 3 describe techniques for administering management of electric power based on the types of electric-power sources (derivations of electric power), but there is room for improvement in view of reducing electric power losses involved in charging and discharging.

Therefore, it is an object of the present invention to provide an electric-power management administration system and the like which reduce electric power losses involved in charging and discharging.

### Solution to Problem

In order to overcome the aforementioned problem, an electric-power management administration system according to the present invention includes an electric-power management administration device adapted to administer charging/discharging of a plurality of charging/discharging systems, wherein the plurality of charging/discharging systems is each connected to a plurality of electric-power supply systems through an electric-power network and is each connected to at least one electric-power demand system, the plurality of charging/discharging systems includes charging/discharging systems having different charging/discharging efficiencies, the plurality of electric-power supply systems includes electric-power supply systems having different electric-power generation schemes, and the electric-power management administration device sets a charging/discharging plan for the plurality of charging/discharging systems, based on the charging/discharging efficiencies, and based on priorities for improving electric-power efficiency, which are associated with the electric-power generation schemes.

Further, an electric-power management administration system according to the present invention includes an electric-power management administration device adapted to correct an amount of accumulated electricity in a charging/discharging system for each electric power type corresponding to an electric-power generation scheme of an electric-power supply source, wherein the electric-power management administration device corrects the amount of accumulated electricity in the charging/discharging system, for each electric-power type, based on an initial value of the amount of accumulated electricity of each electric-power type in the charging/discharging system, an aggregated value of an amount of charged electricity and an amount of discharged electricity of each electric-power type in a predetermined time period, and a measured value of the amount of accumulated electricity acquired at a predetermined measurement time.

### Advantageous Effects of Invention

According to the present invention, it is possible to provide an electric-power management administration system and the like which reduce electric power losses involved in charging and discharging.

### Brief Description of Drawings

[FIG. 1] FIG. 1 is a functional block diagram of an electric-power management administration system according to a first embodiment.
[FIG. 2] FIG. 2 is a block diagram illustrating a hardware structure of an electric-power management administration device included in the electric-power management administration system according to the first embodiment.
[FIG. 3] FIG. 3 is an explanatory diagram regarding an electric-power supply plan in the electric-power management administration system according to the first embodiment.
[FIG. 4] FIG. 4 is an explanatory diagram regarding an electric-power demand plan in the electric-power management administration system according to the first embodiment.
[FIG. 5] FIG. 5 is an explanatory diagram regarding a charging/discharging plan in the electric-power management administration system according to the first embodiment.
[FIG. 6] FIG. 6 is an explanatory diagram regarding transitions of the amounts of electricity accumulated in a first charging/discharging system and a second charging/discharging system in the electric-power management administration system according to the first embodiment.
[FIG. 7] FIG. 7 is an explanatory diagram of data stored in the electric-power management administration device in the electric-power management administration system according to the first embodiment.
[FIG. 8A] FIG. 8A is a sequence diagram relating to a charging/discharging preparation stage in the electric-power management administration system according to the first embodiment.
[FIG. 8B] FIG. 8B is a sequence diagram relating to execution of charging and discharging in the electric-power management administration system according to the first embodiment.
[FIG. 8C] FIG. 8C is a sequence diagram relating to correction of the amounts of charged/discharged electricity in the electric-power management administration system according to the first embodiment.
[FIG. 9] FIG. 9 is a flowchart regarding processes in the electric-power management administration device in the electric-power management administration system according to the first embodiment.
[FIG. 10] FIG. 10 is an explanatory diagram relating to a charging/discharging plan in an electric-power management administration system according to a second embodiment.
[FIG. 11] FIG. 11 is an explanatory diagram regarding transitions of the amounts of electricity accumulated in the respective charging/discharging devices in the electric-power management administration system according to the second embodiment.
[FIG. 12] FIG. 12 is a sequence diagram relating to execution of charging and discharging in the electric-power management administration system according to the second embodiment.
[FIG. 13] FIG. 13 is a flowchart regarding processes in the electric-power management administration device in the electric-power management administration system according to the second embodiment.
[FIG. 14] FIG. 14 is a functional block diagram of an electric-power management administration system according to a third embodiment.
[FIG. 15] FIG. 15 is a flowchart relating to processes in the electric-power management administration device in the electric-power management administration system according to the third embodiment.
[FIG. 16] FIG. 16 is an explanatory diagram regarding the amounts of electricity accumulated in a first charging/discharging system and a second charging/discharging system in the electric-power management administration system according to the third embodiment.
[FIG. 17] FIG. 17 is an explanatory diagram regarding electric-power management administration during a plurality of days in the electric-power management administration system according to a fourth embodiment

### Description of Embodiments

### First Embodiment

### < Structure of electric-power management administration system >

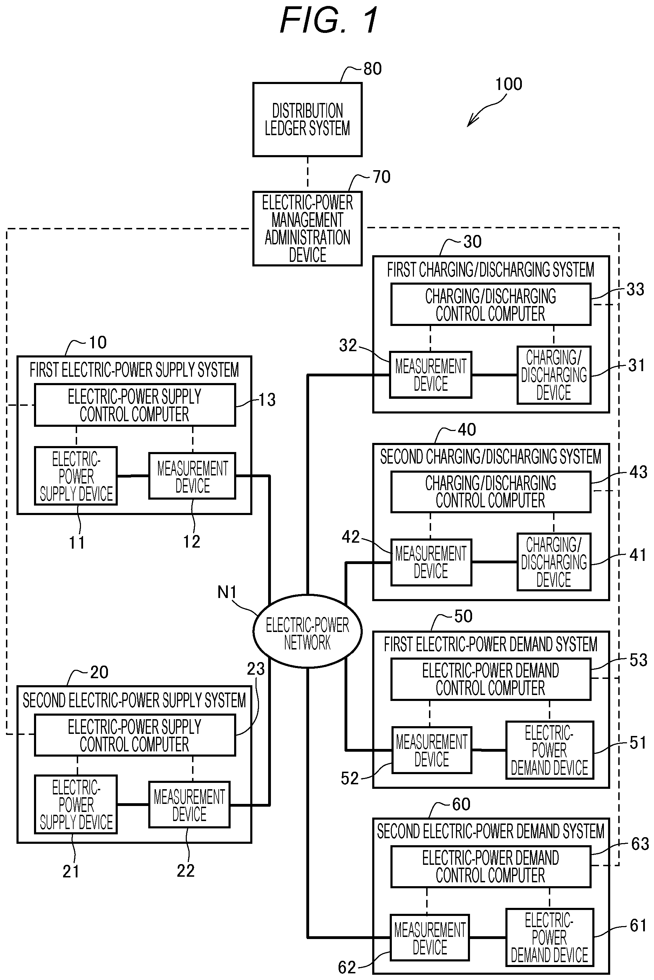

FIG. 1 is a functional block diagram of an electric-power management administration system 100 according to a first embodiment.

Note that thick solid lines illustrated in FIG. 1 indicate electric power lines, and broken lines indicates communication lines.

The electric-power management administration system 100 is a system that administers management of supply and charging/discharging of electric power. As illustrated in FIG. 1, the electric-power management administration system 100 includes a first electric-power supply system 10, a second electric-power supply system 20, a first charging/discharging system 30, a second charging/discharging system 40, a first electric-power demand system 50, a second electric-power demand system 60, an electric-power management administration device 70, and a distribution ledger system 80.

As shown in FIG. 1, the first electric-power supply system 10, the second electric-power supply system 20, the first charging/discharging system 30, the second charging/discharging system 40, the first electric-power demand system 50, and the second electric-power demand system 60 are connected to each other through an electric-power network N1. Further, the respective systems connected to each other through the electric-power network N1 are connected to the electric-power management administration device 70 through the communication lines (the broken lines in FIG. 1).

Each of the first electric-power supply system 10 and the second electric-power supply system 20 is a system that supplies electric power in a predetermined manner through the electric-power network N1. The first electric-power supply system 10 and the second electric-power supply system 20 are different from each other in electric-power generation scheme. In the first embodiment, as an example, there will be described a case where "first electric power" supplied from the first electric-power supply system 10 is electric power generated by renewable energy, while "second electric power" supplied from the second electric-power supply system 20 is electric power generated by non-renewable energy.

Examples of the electric-power generation scheme using renewable energy include hydroelectric power generation, geothermal power generation, biomass power generation, and temperature difference power generation, in addition to solar power generation and wind power generation. Examples of the electric-power generation scheme using non-renewable energy include thermal power generation and nuclear power generation. As will be described in detail later, it is assumed that "first electric power" has higher priority than that of "second electric power", in improving electric power efficiency during charging/discharging and the like. Namely, it is assumed that the electric-power generation scheme of the first electric-power supply system 10 has a higher priority than that of the electric-power generation scheme of the second electric-power supply system 20, in improving electric power efficiency.

The first electric-power supply system 10 is a system that supplies the aforementioned "first electric power", and includes an electric-power supply device 11, a measurement device 12, and an electric-power supply control computer 13. The electric-power supply device 11 is, for example, an electric-power generation facility that generates electric power through predetermined renewable energy. The "first electric power" generated by the electric-power supply device 11 is supplied through the electric-power network N1. The measurement device 12 measures the electric energy of electric power generated by the electric-power supply device 11 in every predetermined time period. The value measured by the measurement device 12 is outputted to the electric-power supply control computer 13. The electric-power supply control computer 13 creates a predetermined electric-power supply plan and controls the electric-power supply device 11 based on the electric-power supply plan. Data of the electric-power supply plan is transmitted from the electric-power supply control computer 13 to the electric-power management administration device 70 through the communication line.

The second electric-power supply system 20 is a system that supplies the aforementioned "second electric power", and includes an electric-power supply device 21, a measurement device 22, and an electric-power supply control computer 23. The electric-power supply device 21 is, for example, an electric-power generation facility that generates electric power through predetermined non-renewable energy. The "second electric power" generated by the electric-power supply device 21 is supplied through the electric-power network N1 in a predetermined manner. The measurement device 22 and the electric-power supply control computer 23 in the second electric-power supply system 20 are similar to those of the first electric-power supply system 10, and are not described.

The first charging/discharging system 30 is a system that is charged with electric power supplied from the first electric-power supply system 10 and the second electric-power supply system 20 and discharges the electric power to the first electric-power demand system 50 and the second electric-power demand system 60. The same applies to the second charging/discharging system 40. As illustrated in FIG. 1, the first charging/discharging system 30 and the second charging/discharging system 40 are both connected to the first electric-power supply system 10 and the second electric-power supply system 20, and are both connected to the first electric-power demand system 50 and the second electric-power demand system 60, through the electric-power network N1.

For example, solar power generation generates a larger amount of electric power in the daytime, but hardly generates electric power at night and, thus, greatly fluctuates in generated electric power depending on the time zone. Further, in many cases, electric power generated by solar power generation is peaked in a different time zone from a time zone in which demanded electric power is peaked. Therefore, predetermined generated electric power is temporarily charged into the first charging/discharging system 30 and the second charging/discharging system 40, and, then, is discharged from the first charging/discharging system 30 and the second charging/discharging system 40 to a demander. Incidentally, in some cases, electric power is directly supplied from the first electric-power supply system 10 or the second electric-power supply system 20 to the first electric-power demand system 50 or the second electric-power demand system 60 through the electric-power network N1.

As illustrated in FIG. 1, the first charging/discharging system 30 includes a charging/discharging device 31, a measurement device 32, and a charging/discharging control computer 33. The charging/discharging device 31 is a chargeable/dischargeable secondary battery such as a battery. The charging/discharging device 31 may be constituted by a plurality of secondary batteries connected to each other in a predetermined manner. In the example according to the first embodiment, it is assumed that the charging and discharging efficiency (also referred to as charging/discharging efficiency) of the charging/discharging device 31 has an initial value of 90%. In many cases, the charging and discharging efficiency varies depending on the type of the battery. Further, in many cases, the charging and discharging efficiency gradually decreases with increasing number of times the battery has been charged and discharged. Incidentally, losses accompanying charging and discharging are due to dissipation of thermal energy and the like during charging and discharging.

The measurement device 32 illustrated in FIG. 1 measures the electric energy charged into the charging/discharging device 31 in each predetermined time period, and the electric energy discharged from the charging/discharging device 31 in each predetermined time period. The value measured by the measurement device 32 is outputted to the charging/discharging control computer 33. The charging/discharging control computer 33 charges and discharges electricity into and from the charging/discharging device 31 in a predetermined manner, based on a charging/discharging plan created by the electric-power management administration device 70. Data of the charged/discharged electric energy and the like is transmitted from the charging/discharging control computer 33 to the electric-power management administration device 70 through the communication line.

The second charging/discharging system 40 is a system that is charged with electric power and discharges electric power, and includes a charging/discharging device 41, a measurement device 42, and a charging/discharging control computer 43. The charging/discharging device 41 is a chargeable/dischargeable secondary battery such as a battery. In the example according to the first embodiment, it is assumed that the charging and discharging efficiency of the charging/discharging device 41 has an initial value of 80%. As described above, the charging and discharging efficiency (for example, 80%) of the second charging/discharging system 40 is lower than the charging and discharging efficiency (for example, 90%) of the first charging/discharging system 30. Further, charging/discharging plans for the first charging/discharging system 30 and the second charging/discharging system 40 are created, based on the magnitudes of their charging and discharging efficiencies

The measurement device 42 and the charging/discharging control computer 43 in the second charging/discharging system 40 illustrated in FIG. 1 are similar to those of the first charging/discharging system 30, and are not described.

The first electric-power demand system 50 is a system that demands electric power, and includes an electric-power demand device 51, a measurement device 52, and an electric-power demand control computer 53. The electric-power demand device 51 is an apparatus that consumes electric power. Examples of such an apparatus include household electric appliances such as air conditioners, washing machines, and vacuum cleaners, electronic apparatuses such as computers, and machine tools for use in factories, but the apparatus is not limited thereto. The measurement device 52 measures the electric energy consumed by the electric-power demand device 51 in each predetermined time period. The value measured by the measurement device 52 is outputted to the electric-power demand control computer 53. The electric-power demand control computer 53 creates a predetermined electric-power demand plan and controls the electric-power demand device 51 based on the electric-power demand plan. Data of the electric-power demand plan is transmitted from the electric-power demand control computer 53 to the electric-power management administration device 70 through the communication line.

The second electric-power demand system 60 is a system that demands electric power, and includes an electric-power demand device 61, a measurement device 62, and an electric-power demand control computer 63. The structure of the second electric-power demand system 60 is similar to that of the first electric-power demand system 50 and is not described.

The electric-power management administration device 70 administers charging and discharging electricity into and from the first charging/discharging system 30 and the second charging/discharging system 40 based on the electric-power supply plan and the electric-power demand plan. Further, the electric-power management administration device 70 administers data of the amount of charged electricity, the amount of discharged electricity, and the amount of accumulated electricity in the first charging/discharging system 30 and the second charging/discharging system 40, for each electric power type ("first electric power" and "second electric power" described above).

The distribution ledger system 80 is a system that records data received from the electric-power management administration device 70, and is connected to the electric-power management administration device 70 through the communication line.

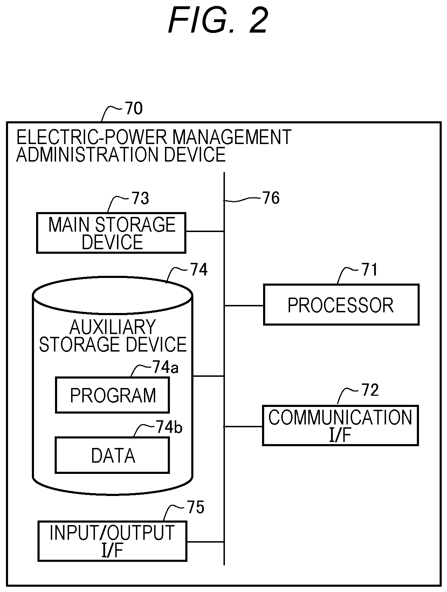

FIG. 2 is a block diagram illustrating a hardware structure of the electric-power management administration device.

The electric-power management administration device 70 illustrated in FIG. 2 may be constituted by one computer (server or the like), or by a plurality of computers cooperating to execute various functions. As illustrated in FIG. 2, the electric-power management administration device 70 includes a processor 71, a communication interface 72, a main storage device 73, an auxiliary storage device 74, an input/output interface 75, and a bus 76 connecting these structures to each other.

The processor 71 develops, in the main storage device 73, a program 74a stored in the auxiliary storage device 74, thereby executing predetermined processes. As the processor 71 as described above, for example, a central processing unit (CPU), a digital signal processor (DSP), or an application specific integrated circuit (ASIC) is used. The communication interface 72 is an interface used for communication between each of the other systems and the electric-power management administration device 70.

The main storage device 73 stores predetermined programs and data. As such a main storage device 73, for example, a flash memory or a random access memory (RAM) is used. The auxiliary storage device 74 illustrated in FIG. 2 stores the predetermined program 74a and data 74b. As such an auxiliary storage device 74, for example, a solid state drive device or a hard disk drive (HDD) is used, besides a nonvolatile semiconductor memory (Flash memory, EPROM (Erasable Programmable ROM)). The program 74a may be downloaded from a predetermined server (not illustrated) or may be read from a predetermined storage medium (not illustrated).

The input/output interface 75 outputs predetermined signals based on user's manipulations through an input device (not illustrated). As such an input device (not illustrated), for example, a mouse or a microphone is used, besides a keyboard or a touch panel. The input/output interface 75 outputs data stored in the main storage device 73 and the auxiliary storage device 74, in addition to data processed by the processor 71, to an output device (not illustrated). As such an output device (not illustrated), for example, a printer or a speaker is used, besides a display device such as a liquid crystal display (LCD) or an electroluminescence (EL) panel.

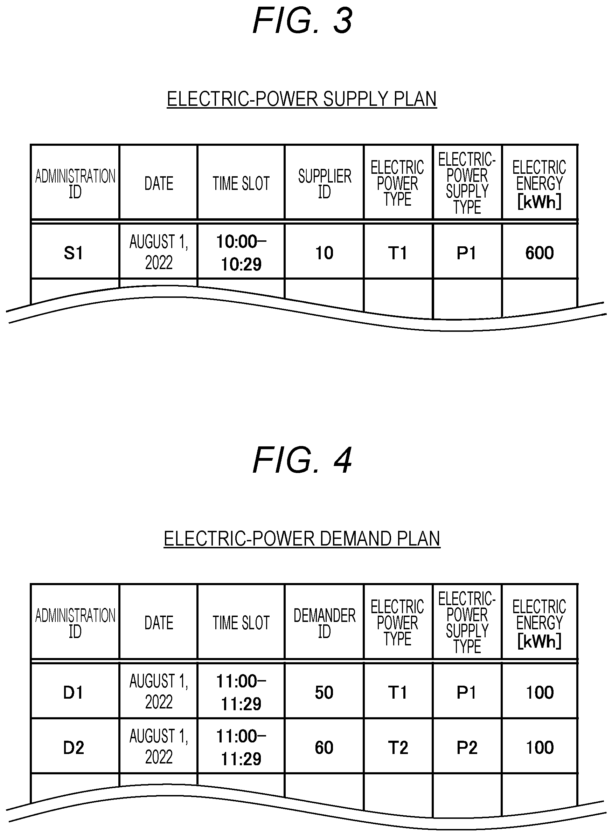

FIG. 3 is an explanatory diagram regarding an electric-power supply plan (also refer to FIG. 1 as appropriate).

As described above, the electric-power supply plan is created by the first electric-power supply system 10 and the second electric-power supply system 20. Thereafter, the created electric-power supply plan is notified to the electric-power management administration device 70. As illustrated in FIG. 3, the electric-power supply plan has fields (items), which include "Administration ID ", "Date", "Time Slot", "Supplier ID", "Electric Power Type", "Electric-Power Supply Type", and "Electric Energy". "Administration ID " is information for identifying each electric-power supply plan. "Date" is the date on which supply of electric power is to be performed. "Time Slot" is a time zone in which supply of electric power is to be performed. "Supplier ID" is information for identifying the supply source of electric power. Incidentally, "10" as "Supplier ID" in FIG. 3 indicates that the supply source of electric power is the first electric-power supply system 10. Namely, "10", which is the reference code of the first electric-power supply system, is set as "Supplier ID".

"Electric Power Type" illustrated in FIG. 3 is data specifying the type of electric power. In the first embodiment, there will be described a case where "first electric power" (electric power type T1) generated by renewable energy or "second electric power" (electric power type T2) generated by non-renewable energy is used as "Electric Power Type", but "Electric Power Type" is not limited thereto.

"Electric-Power Supply Type" illustrated in FIG. 3 is data specifying the type of electric power (power supply), which is a segment of "Electric Power Type". Such "Electric-Power Supply Type" is associated with, for example, solar power generation, wind power generation, or hydroelectric power generation.

"Electric Energy" illustrated in FIG. 3 is electric energy supplied from the electric-power supply source identified by the "supplier ID" in a predetermined time zone. In the example of FIG. 3, as an electric-power supply plan with "Administration ID" of S1, there is made a plan for causing the first electric-power supply system 10 to supply electric power of an electric power type T1 and an electric-power supply type P1 by an electric energy of 600 [kWh], in a time zone of 10:00 to 10:29 on August 1, 2022. Incidentally, the method for creating an electric-power supply plan is not particularly limited, and a known method can be appropriately used.

FIG. 4 is an explanatory diagram regarding an electric-power demand plan (also refer to FIG. 1 as appropriate.).

As described above, the electric-power demand plan is created by the first electric-power demand system 50 and the second electric-power demand system 60. Thereafter, the created electric-power demand plan is notified to the electric-power management administration device 70. The electric-power demand plan illustrated in FIG. 4 has fields (items), which include "Administration ID ", "Date", "Time Slot", "Demander ID", "Electric Power Type ", "Electric-Power Supply Type", and "Electric Energy". "Demander ID" is information for identifying a demander of electric power. For example, "50" as "Demander ID" illustrated in FIG. 4 indicates that the demander of electric power is the first electric-power demand system 50. Incidentally, the other fields (items) in the electric-power demand plan are similar to those described regarding the electric-power supply plan (see FIG. 3) and are not described. Further, a method for creating an electric-power demand plan is not particularly limited, and a known method can be appropriately used.

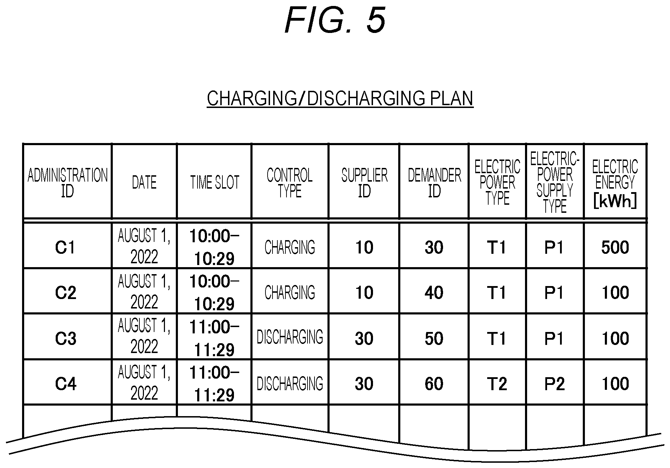

FIG. 5 is an explanatory diagram regarding a charging/discharging plan (also refer to FIG. 1 as appropriate.).

The charging/discharging plan illustrated in FIG. 5 is created by the electric-power management administration device 70, based on the aforementioned electric-power supply plan (see FIG. 3) and electric-power demand plan (see FIG. 4). The charging/discharging plan illustrated in FIG. 5 has fields (items), which include "Administration ID ", "Date", "Time Slot", "Control Type", "Supplier ID", "Demander ID", "Electric Power Type ", "Electric-Power Supply Type", and "Electric Energy". "Control Type", which is one of the fields (items) in such a charging/discharging plan, indicates distinction between charging and discharging.

For example, in a case where "Control Type" is "charging", information for identifying the first electric-power supply system 10 or the second electric-power supply system 20 as the electric power supply source is used as "Supplier ID", while information for identifying the first charging/discharging system 30 or the second charging/discharging system 40 as the receiver of supplied electric power is used as "Demander ID". In a charging/discharging plan with an Administration ID of "C1 " in FIG. 5, there is made a plan for charging "first electric power" of the electric-power type T1 and the electric-power supply type P1 in an amount of 500 [kWh] from the first electric-power supply system 10 into the first charging/discharging system 30, in a time zone of 10:00 to 10:29 on August 1, 2022.

Further, in a case where "Control Type" is "discharging", information for identifying the first charging/discharging system 30 or the second charging/discharging system 40 as the electric-power supply source is used as "Supplier ID", while information for identifying the first electric-power demand system 50 or the second electric-power demand system 60 as the demander of electric power is used as "Demander ID". In a charging/discharging plan with an Administration ID of "C4 " in FIG. 5, there is made a plan for discharging "second electric power" of an electric power type T2 and an electric-power supply type P2 by an electric energy of 100 [kWh], from the first charging/discharging system 30 to the second electric-power demand system 60, in a time zone of 11:00 to 11:29 on August 1, 2022.

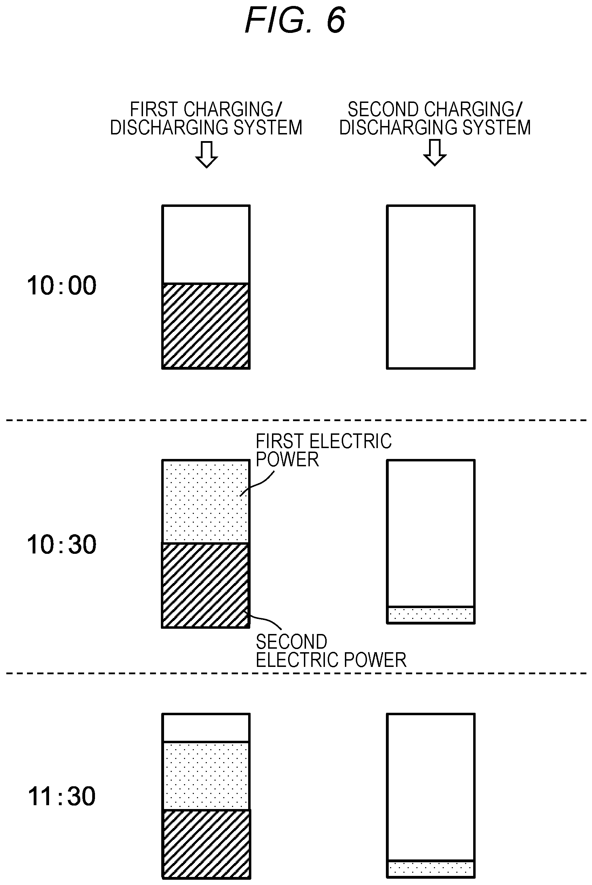

FIG. 6 is an explanatory diagram regarding transitions of the amounts of electricity accumulated in the first charging/discharging system and the second charging/discharging system (see also FIG. 1 as appropriate).

The transitions of the amounts of accumulated electricity illustrated in FIG. 6 correspond to the electric-power supply plan (see FIG. 3), the electric-power demand plan (see FIG. 4), and the charging/discharging plan (see FIG. 5). In FIG. 6, the amounts of "first electric power" (for example, electric power generated by renewable energy) accumulated in the first charging/discharging system 30 and the second charging/discharging system 40 are indicated by dots, white the amounts of "second electric power " (for example, electric power generated by non-renewable energy) accumulated therein are indicated by hatching. It is assumed that the charging capacities of the first charging/discharging system 30 and the second charging/discharging system 40 are both 1000 [kWh]. Further, it is assumed that "second electric power" has been accumulated by an electric energy of 500 [kWh] in the first charging/discharging system 30 at a time point of 10:00.

In the electric-power supply plan illustrated in FIG. 3, "first electric power" (the electric-power type T1) in an amount of 600 [kWh] is supplied from the first electric-power supply system 10 in a time zone of 10:00 to 10:29 on August 1, 2022. When "first electric power" in an amount of 600 [kWh] is temporarily charged, the electric-power management administration device 70 creates a charging/discharging plan in such a way as to charge the electric power in descending order of charging and discharging efficiency. In the charging/discharging plan in FIG. 5, electric power of 500 [kWh], out of the electric power of 600 [kWh], is charged into the first charging/discharging system 30 having a higher charging and discharging efficiency (administration ID: C1). The remaining electric power of 100 [kWh], which can not be fully charged into the first charging/discharging system 30, is charged into the second charging/discharging system 40 having a lower charging and discharging efficiency (administration ID: C2). This results in a state at "10: 30" in FIG. 6.

As described above, when a predetermined electric energy from the first electric-power supply system 10 is charged, the electric-power management administration device 70 charges an electric energy into the empty region of the first charging/discharging system 30, and charges the surplus electric energy which cannot be charged into the empty region, into the second charging/discharging system 40. Accordingly, electricity is preferentially charged into the first charging/discharging system 30 having a higher charging and discharging efficiency, which can reduce electric power losses accompanying charging.

In the electric-power demand plan illustrated in FIG. 4, in a time zone of 11:00 to 11:29 on August 1, 2022, the first electric-power demand system 50 demands "first electric power" of 100 [kWh], and the second electric-power demand system 60 demands "second electric power" of 100 [kWh]. In the charging/discharging plan illustrated in FIG. 5, "first electric power" of 100 [kWh] is supplied to the first electric-power demand system 50, and "second electric power" of 100 [kWh] is supplied to the second electric-power demand system 60. This results in a state at "11: 30" in FIG. 6.

As described above, the electric-power management administration device 70 uses the priorities based on the electric-power generation schemes, as the order for determining which type of electric power should be charged into the first charging/discharging system 30 having a higher charging and discharging efficiency. Namely, the electric-power management administration device 70 determines the charging/discharging plan for the first charging/discharging system 30 and the second charging/discharging system 40, based on their charging and discharging efficiencies (charging/discharging efficiencies), and based on the priorities for improving the electric power efficiency, which are associated with electric-power generation schemes. Further, the electric-power management administration device 70 preferentially charges or discharges electricity into or from a charging/discharging system having a higher charging and discharging efficiency (charging/discharging efficiency), out of the first charging/discharging system 30 and the second charging/discharging system 40. This reduces the loss of the "first electric power" having a higher priority in improving the electric power efficiency, which enables administering the electric power management in such a way as to use "first electric power" with higher efficiency.

As an example different from that of FIG. 6, although not illustrated, it is assumed that an electric-power supply plan is made for supplying "first electric power" from the first electric-power supply system 10 and "second electric power" from the second electric-power supply system 20, in a time zone of 10:00 to 10:29. In this case, the electric-power management administration device 70 makes a charging/discharging plan so as to charge "first electric power" into the first charging/discharging system 30 and to charge "second electric power" into the second charging/discharging system 40. That is, when supplies of "first electric power" and "second electric power" temporally overlap each other, the electric-power management administration device 70 preferentially allocates "first electric power" to the first charging/discharging system 30 having a higher charging and discharging efficiency. This can reduce the electric power loss involved in charging/discharging "first electric power", which enables efficiently managing "first electric power" having a higher priority.

As described above, when there is an overlap of a time zone in which electric power from the first electric-power supply system 10 is charged, and a time zone in which electric power from the second electric-power supply system 20 is charged, at least partially, the electric-power management administration device 70 charges electric power from the first electric-power supply system 10 into the first charging/discharging system 30 and charges electric power from the second electric-power supply system 20 into the second charging/discharging system 40 in this at least partial time zone. Alternatively, even when the electric power from the first electric-power supply system 10 is all charged into the first charging/discharging system 30, if there remains a free capacity therein, the electric power from the second electric-power supply system 20 is charged into the free capacity of the first charging/discharging system 30 and into the second charging/discharging system 40. This can reduce the electric power loss involved in charging and discharging of "first electric power", as described above.

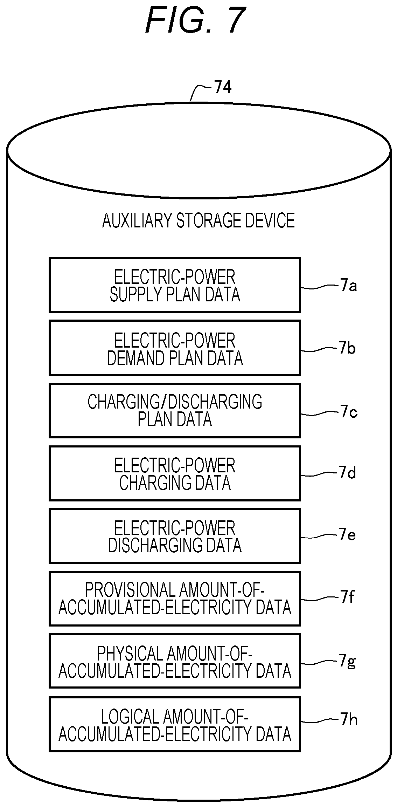

FIG. 7 is an explanatory diagram of data stored in the electric-power management administration device (see also FIG. 1 as appropriate.).

As illustrated in FIG. 7, the auxiliary storage device 74 in the electric-power management administration device 70 (see FIG. 2) stores electric-power supply plan data 7a, electric-power demand plan data 7b, charging/discharging plan data 7c, electric-power charging data 7d, electric-power discharging data 7e, provisional amount-of-accumulated-electricity data 7f, physical amount-of-accumulated-electricity data 7g, and logical amount-of-accumulated-electricity data 7h.

The electric-power supply plan data 7a is data of the electric-power supply plan, and is transmitted from the first electric-power supply system 10 or the second electric-power supply system 20 to the electric-power management administration device 70. The electric-power demand plan data 7b is data of the electric-power demand plan, and is transmitted from the first electric-power demand system 50 and the second electric-power demand system 60 to the electric-power management administration device 70. The charging/discharging plan data 7c is data of the charging/discharging plan, and is created by the electric-power management administration device 70.

The electric-power charging data 7d is data for administering, for each electric power type, the amounts of electricity charged in the first charging/discharging system 30 and the second charging/discharging system 40. The electric-power discharging data 7e is data for administering, for each electric power type, the amounts of electricity discharged from the first charging/discharging system 30 and the second charging/discharging system 40. The provisional amount-of-accumulated-electricity data 7f is data for administering, for each electric power type, the provisional amounts of accumulated electricity calculated based on the amounts of charged electricity and the amounts of discharged electricity. The "provisional amounts of accumulated electricity" are the amounts of accumulated electricity in the first charging/discharging system 30 and the second charging/discharging system 40, without particular consideration of electric power losses involved in charging and discharging.

The physical amount-of-accumulated-electricity data 7g is the amounts of accumulated electricity in the first charging/discharging system 30 and the second charging/discharging system 40 based on the results of measurements by the measurement devices 32 and 42. The logical amount-of-accumulated-electricity data 7h indicates amounts of accumulated electricity resulted from correcting the provisional amount-of-accumulated-electricity data 7f with electric power losses involved in charging and discharging, based on the physical amount-of-accumulated-electricity data 7g. The logical amount-of-accumulated-electricity data 7h is administered for each electric power type.

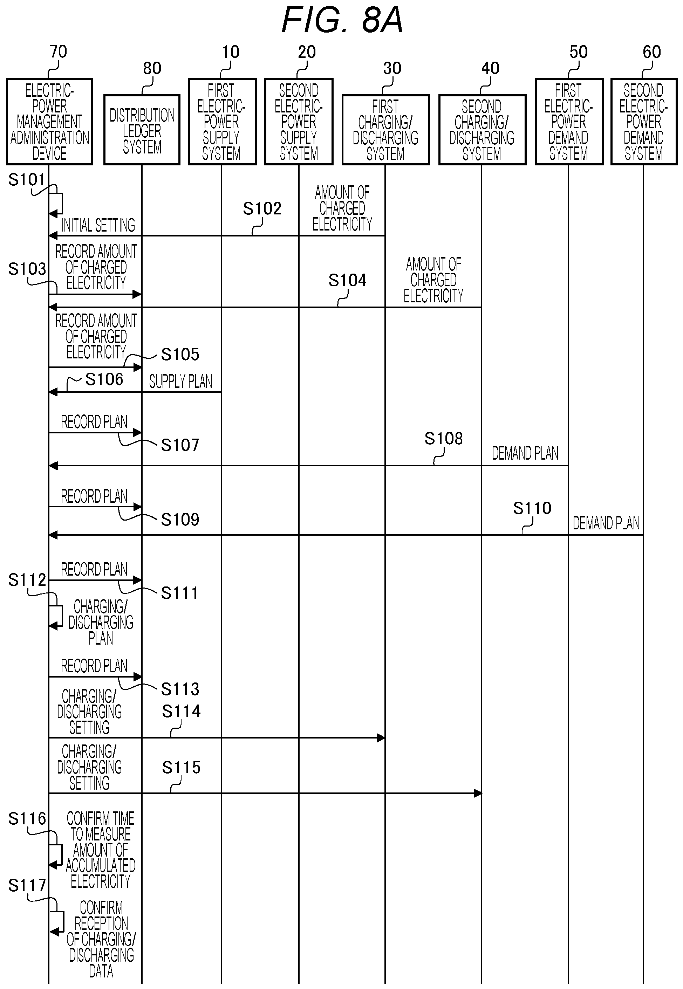

FIG. 8A is a sequence diagram relating to a charging/discharging preparation stage in the electric-power management administration system (see also FIG. 1 as appropriate).

In a step S101 in FIG. 8A, the electric-power management administration device 70 performs initial settings. That is, the electric-power management administration device 70 sets the initial values of the charging and discharging efficiencies of the first charging/discharging system 30 and the second charging/discharging system 40, and the like, based on administrator's inputting manipulations. Then, the electric-power management administration device 70 receives an initial value of the amount of charged electricity from the first charging/discharging system 30 (S102), and records the initial value in the distribution ledger system 80 (S103). For example, the electric-power management administration device 70 records the fact that "second electric power" in an amount of 500 [kWh] has been accumulated in the first charging/discharging system 30 (see FIG. 6). Similarly, the electric-power management administration device 70 receives an initial value of the amount of charged electricity from the second charging/discharging system 40 (S104), and records the initial value in the distribution ledger system 80 (S105). For example, the electric-power management administration device 70 records the fact that the initial value of the amount of charged electricity in the second charging/discharging system 40 is 0 [kWh] (see FIG. 6).

Next, the electric-power management administration device 70 receives an electric-power supply plan from the first electric-power supply system 10 (S106) and records the electric-power supply plan in the distribution ledger system 80 (S107). For example, the electric-power management administration device 70 records, therein, data specified by an administration ID of S1 in FIG. 3. In FIG. 7A, there is illustrated an example of a case where there is no electric-power supply plan for the second electric-power supply system 20 in particular. However, when there is an electric-power supply plan for the second electric-power supply system 20, this electric-power supply plan is also recorded.

Next, the electric-power management administration device 70 receives an electric-power demand plan from the first electric-power demand system 50 (S108), and records the electric-power demand plan in the distribution ledger system 80 (S109). For example, the electric-power management administration device 70 records data specified by an administration ID of D1 in FIG. 4. Similarly, the electric-power management administration device 70 receives an electric-power demand plan from the second electric-power demand system 60 (S110), and records the electric-power demand plan in the distribution ledger system 80 (S111). For example, the electric-power management administration device 70 records data specified by an administration ID of D2 in FIG. 4.

Then, the electric-power management administration device 70 creates a charging/discharging plan based on the received electric-power supply plan and electric-power demand plan (step S112), and records the charging/discharging plan in the distribution ledger system 80 (S113). For example, the electric-power management administration device 70 creates a charging/discharging plan for administration IDs of C1 to C4 in FIG. 5.

In a step S114, the electric-power management administration device 70 performs charging/discharging settings for the first charging/discharging system 30. For example, the electric-power management administration device 70 performs charging/discharging settings, based on the charging/discharging plan with administration IDs of C1, C3, and C4 in FIG. 5. In a step S115, the electric-power management administration device 70 performs charging/discharging settings for the second charging/discharging system 40. For example, the electric-power management administration device 70 performs charging/discharging settings, based on a charging/discharging plan with an administration ID of C2 in FIG. 5.

Next, in a step S116, the electric-power management administration device 70 determines whether the time has come to measure the amount of accumulated electricity (the physical amount of accumulated electricity) in the first charging/discharging system 30 and the second charging/discharging system 40. When the time has come to measure the amount of accumulated electricity, the electric-power management administration device 70 makes a request of the first charging/discharging system 30 and the second charging/discharging system 40 for notification of the amount of accumulated electricity.

In a step S117, the electric-power management administration device 70 determines whether or not it has received charging/discharging data (charged or discharged electric energy) from the first charging/discharging system 30 and the second charging/discharging system 40. If it has received charging/discharging data about the first charging/discharging system 30 and the second charging/discharging system 40, the electric-power management administration device 70 records the charging/discharging data in the distribution ledger system 80.

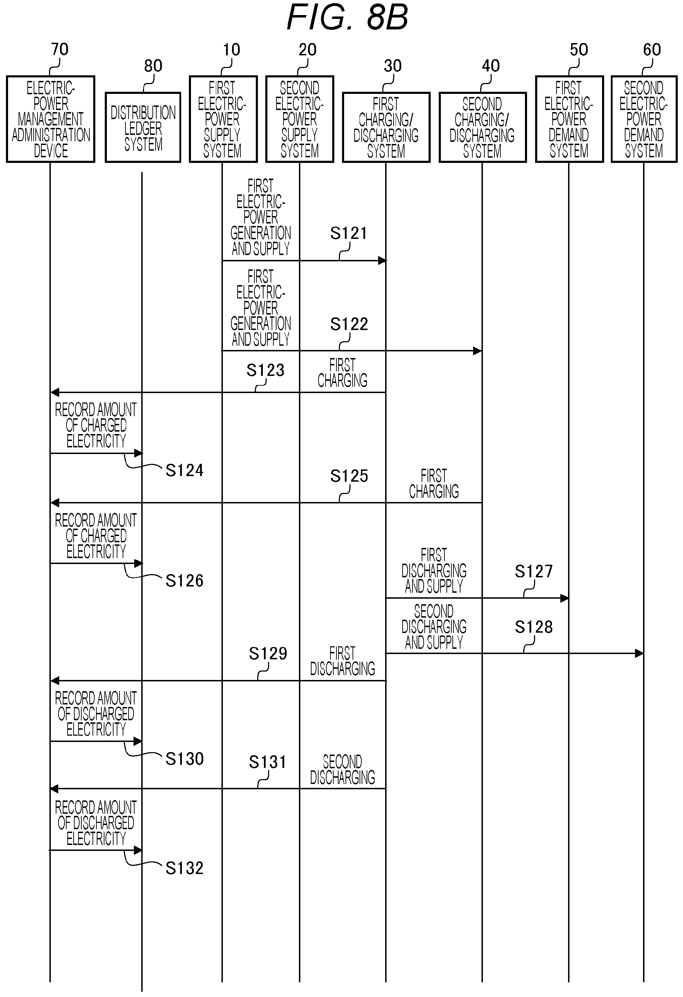

FIG. 8B is a sequence diagram relating to execution of charging and discharging in the electric-power management administration system (see also FIG. 1 as appropriate).

It is assumed that at least the charging/discharging setting processes (S114 and S115: see FIG. 8A) have already been performed, at the start of a series of processes in FIG. 8B.

In a step S121 of FIG. 8B, if a predetermined time based on the electric-power supply plan has come, the first electric-power supply system 10 supplies "first electric power" as generated electric power to the first charging/discharging system 30 (described as "first electric-power generation and supply" in FIG. 8B). In the example of FIG. 5, control corresponding to an administration ID of C1 is performed. In a step S122, the first electric-power supply system 10 supplies first electric power as generated electric power to the second charging/discharging system 40. In the example of FIG. 5, control corresponding to an administration ID of C2 is performed.

In a step S123, the first charging/discharging system 30 notifies the electric-power management administration device 70 of a measured value of the amount of charged electricity. In the example of an administration ID of C1 in FIG. 5, as the amount of charged electricity in the first charging/discharging system 30, a value of 500 [kWh] is notified to the electric-power management administration device 70. In a step S124, the electric-power management administration device 70 records, in the distribution ledger system 80, data of the amount of charged electricity having been received from the first charging/discharging system 30.

In a step S125, the second charging/discharging system 40 notifies the electric-power management administration device 70 of a measured value of the amount of charged electricity. In the example of an administration ID of C2 in FIG. 5, as the amount of charged electricity in the first charging/discharging system 40, a value of 100 [kWh] is notified to the electric-power management administration device 70. In a step S126, the electric-power management administration device 70 records, in the distribution ledger system 80, data of the amount of charged electricity having been received from the second charging/discharging system 40.

In a step S127, when a predetermined time based on the charging/discharging plan has come, the first charging/discharging system 30 discharges a predetermined electric energy to the first electric-power demand system 50. In the example of FIG. 5, control corresponding to an administration ID of C3 is performed.

In a step S128, when a predetermined time based on the charging/discharging plan has come, the first charging/discharging system 30 discharges a predetermined electric energy to the second electric-power demand system 60. In the example of FIG. 5, control corresponding to an administration ID of C4 is performed. In the example of FIG. 5, charging and discharging electricity into and from the second charging/discharging system 40 are not particularly set, and thus are not illustrated in FIG. 8B.

In a step S129, the first charging/discharging system 30 notifies the electric-power management administration device 70 of the discharging of "first electric power". In the example of an administration ID of C3 in FIG. 5, the electric-power management administration device 70 is notified of a value of 100 [kWh], as "first electric power" discharged from the first charging/discharging system 30. In a step S130, the electric-power management administration device 70 records, in the distribution ledger system 80, the amount of discharged "first electric power" having been received from the first charging/discharging system 30.

In a step S131, the first charging/discharging system 30 notifies the electric-power management administration device 70 of the discharging of "second electric power". In the example of an administration ID of C4 in FIG. 5, the electric-power management administration device 70 is notified of a value of 100 [kWh], as "second electric power" discharged from the first charging/discharging system 30. In a step S132, the electric-power management administration device 70 records, in the distribution ledger system 80, the amount of discharged "second electric power" having been received from the first charging/discharging system 30.

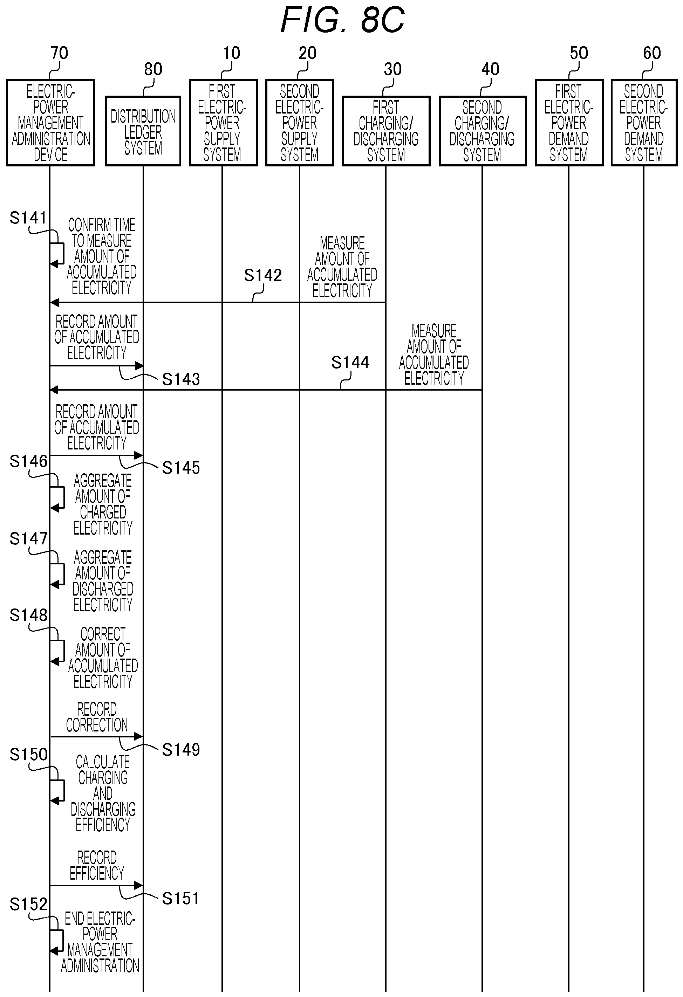

FIG. 8C is a sequence diagram relating to correction of the amounts of charged/discharged electricity in the electric-power management administration system (also see FIG. 1 as appropriate).

Incidentally, a series of processes in FIG. 8C may be started after the completion of the series of processes in FIG. 8B or at another timing. In a step S141, the electric-power management administration device 70 determines whether or not it is time to measure the amounts of accumulated electricity (physical amounts of accumulated electricity) in the first charging/discharging system 30 or the second charging/discharging system 40. The frequency of measurement of the amounts of accumulated electricity is preliminarily determined, such that the measurement is performed every day or every week.

When the time has come to measure the amounts of accumulated electricity, the electric-power management administration device 70 acquires data of the amount of accumulated electricity from the first charging/discharging system 30 (S142), and records the data in the distribution ledger system 80 (S143). For example, the electric-power management administration device 70 acquires a value of 730 [kWh] as the amount of accumulated electricity in the first charging/discharging system 30, and records the acquired value in the distribution ledger system 80.

Similarly, the electric-power management administration device 70 acquires data of the amount of accumulated electricity from the second charging/discharging system 40 (S144), and records the data in the distribution ledger system 80 (S145). For example, the electric-power management administration device 70 acquires a value of 80 [kWh] as the amount of accumulated electricity in the second charging/discharging system 40, and records the acquired value in the distribution ledger system 80.

In a step S146, the electric-power management administration device 70 aggregates the amounts of accumulated electricity. For example, the electric-power management administration device 70 aggregates the amounts of accumulated electricity of each electric power type in each charging/discharging system, such that "first electric power" in an amount of 500 [kWh] has been charged into the first charging/discharging system 30, and "first electric power" in an amount of 100 [kWh] has been charged into the second charging/discharging system 40 (refer to administration IDs: C1 and C2 in FIG. 5.).

In a step S147, the electric-power management administration device 70 aggregates the amounts of discharged electricity. For example, the electric-power management administration device 70 aggregates the amounts of discharged electricity of each electric power type in each charging/discharging system, such that "first electric power" in an amount of 100 [kWh] has been discharged from the first charging/discharging system 30, and "second electric power" in an amount of 100 [kWh] has been discharged therefrom (refer to administration IDs: C3 and C4 in FIG. 5.).

In a step S148, the electric-power management administration device 70 corrects the amounts of accumulated electricity. Namely, the electric-power management administration device 70 corrects the amount of accumulated electricity of each electric power type, based on the initial value of the amount of accumulated electricity (the physical amount of accumulated electricity) of each electric power type, the aggregated amounts of charged electricity and discharged electricity, the provisional amount of accumulated electricity, and the amount of accumulated electricity acquired at the measurement time.

For example, it is assumed that the initial value of the amount of accumulated electricity (the physical amount of accumulated electricity) in the first charging/discharging system 30 is 500 [kWh], and the electric power type thereof is "second electric power". In the example of FIG. 5, "first electric power" in an amount of 500 [kWh] is charged into the first charging/discharging system 30, thereafter, "first electric power" in an amount of 100 [kWh] is discharged from the first charging/discharging system 30, and "second electric power" in an amount of 100 [kWh] is discharged therefrom (see also FIG. 6). Therefore, the provisional amount of accumulated electricity in the first charging/discharging system 30 is 800 [kWh]. As described above, the charging/discharging amount of accumulated electricity is the amount of accumulated electricity without particular consideration of losses involved in charging and discharging.

On the other hand, for example, it is assumed that the measurement of the amount of accumulated electricity in the step S142 results in that the amount of accumulated electricity (the physical amount of accumulated electricity) in the first charging/discharging system 30 is 730 [kWh]. In this case, an electric power loss of 70 [kWh] has occurred due to charging and discharging of the first charging/discharging system 30, but the electric power losses of the respective electric power types are not identified. Therefore, in the first embodiment, the electric-power management administration device 70 calculates the electric power loss of each electric power type, based on the rate of the amount of charged/discharged electricity to the total amount of electricity charged/discharged during a predetermined time period.

In the example of FIG. 5, regarding "first electric power" of the electric power type T1, the sum of the amount of charged electricity (500 [kWh]) and the amount of discharged electricity (100 [kWh]) is 600 [kWh]. Further, regarding "second electric power" of the electric power type T2, the sum of the amount of charged electricity (0 [kWh]) and the amount of discharged electricity (100 [kWh]) is 100 [kWh]. Then, the total amount of charged/discharged electricity is 700 [kWh]. Regarding "first electric power", the amount of charged/discharged electricity is 600 [kWh] with respect to the total amount of charged/discharged electricity, which is 700 [kWh]. Therefore, the electric-power management administration device 70 determines that the electric power loss is 60 [kWh] based on the calculation formula of 70× (600/700).

Further, regarding "second electric power", electricity in an amount of 100 [kWh] has been charged/discharged with respect to the total amount of charged/discharged electricity, which is 700 [kWh]. Therefore, the electric-power management administration device 70 determines that the electric power loss is 10 [kWh] based on the calculation formula of 70× (100/700). Further, the electric-power management administration device 70 determines that the amount (the logical amount) of "first electric power" accumulated in the first charging/discharging system 30 is 340 [kWh] (=400 [kWh]-60 [kWh]), and that the amount of "second electric power" accumulated therein is 390 [kWh] (=400 [kWh]-10 [kWh]). Further, the electric-power management administration device 70 generates logical-amount-of-accumulated-electricity data 7h (see FIG. 7).

Further, in the example of FIG. 5, the initial value of the amount of accumulated electricity in the second charging/discharging system 40 is 0 [kWh] and, thereafter, "first electric power" in an amount of 100 [kWh] is charged into the second charging/discharging system 40. Therefore, the provisional amount of accumulated electricity in the second charging/discharging system 40 is 100 [kWh]. On the other hand, it is assumed that the measurement of the amount of accumulated electricity in the step S145 results in that the amount (the physical amount) of accumulated electricity in the second charging/discharging system 40 is 80 [kWh]. In this case, an electric power loss of 20 [kWh] has been caused due to charging of the second charging/discharging system 40. Therefore, the electric-power management administration device 70 determines that the amount (logical amount) of "first electric power" accumulated in the second charging/discharging system 40 is 80 [kWh].

As described above, the electric-power management administration device 70 allocates the electric power loss due to charging and discharging to the respective electric power types, based on the rate of the amount of charged/discharged electricity of each electric power type to the total amount of electricity charged/discharged during a predetermined time period. Further, the electric-power management administration device 70 subtracts the electric power loss resulted from the allocation from the provisional amount of accumulated electricity of each electric power type, thereby calculating a corrected amount of accumulated electricity of each electric power type. By performing the aforementioned process, it is possible to appropriately calculate the corrected amount (logical amount) of accumulated electricity of each electric power type, based on the rate of the amount of charged/discharged electricity of each electric power type.

The aforementioned provisional amount of accumulated electricity of each electric power type is calculated, for example, by adding the aggregated value of the amounts of charged/discharged electricity of each electric power type to the initial value of the amount of accumulated electricity of each electric power type in the first charging/discharging system 30 (the charging/discharging system) and, then, subtracting, therefrom, the aggregated value of the amounts of discharged electricity of each electric power type. The same applies to the provisional amount of accumulated electricity in the second charging/discharging system 40 (the charging/discharging system).

Further, the electric power loss before being allocated (electric power loss before being allocated to the respective electric power types) is calculated by subtracting the measured value of the amount of accumulated electricity from the sum of the provisional amounts of accumulated electricity of the respective electric power types. Here, the sum of the provisional amounts of accumulated electricity will be described. For example, when the provisional amount of "first electric power" accumulated in the first charging/discharging system 30 is 400 [kWh], and the provisional amount of "second electric power" accumulated therein is 400 [kWh], the sum of the provisional amounts of accumulated electricity in the first charging/discharging system 30 is 800 [kWh].

Next, in a step S149, the electric-power management administration device 70 records the corrected and logical amount of accumulated electricity, in the distribution ledger system 80.

In a step S150, the electric-power management administration device 70 calculates the charging and discharging efficiencies at the time of latest measurement of the amount of accumulated electricity. Specifically, since the total amount of electricity charged and discharged into and from the first charging/discharging system 30 is 700 [kWh], and 70 [kWh] out of the total amount is the electric power loss, the electric-power management administration device 70 determines that the charging and discharging efficiency is 90%. Further, since the total amount of electricity charged and discharged into and from the second charging/discharging system 40 is 100 [kWh], and 20 [kWh] out of the total amount is the electric power loss, the electric-power management administration device 70 determines that the charging and discharging efficiency is 80%.

In a step S151, the electric-power management administration device 70 records the charging and discharging efficiencies of the first charging/discharging system 30 and the second charging/discharging system 40, in the distribution ledger system 80. Then, in a step S152, the electric-power management administration device 70 ends the series of processes relating to electric-power management administration.

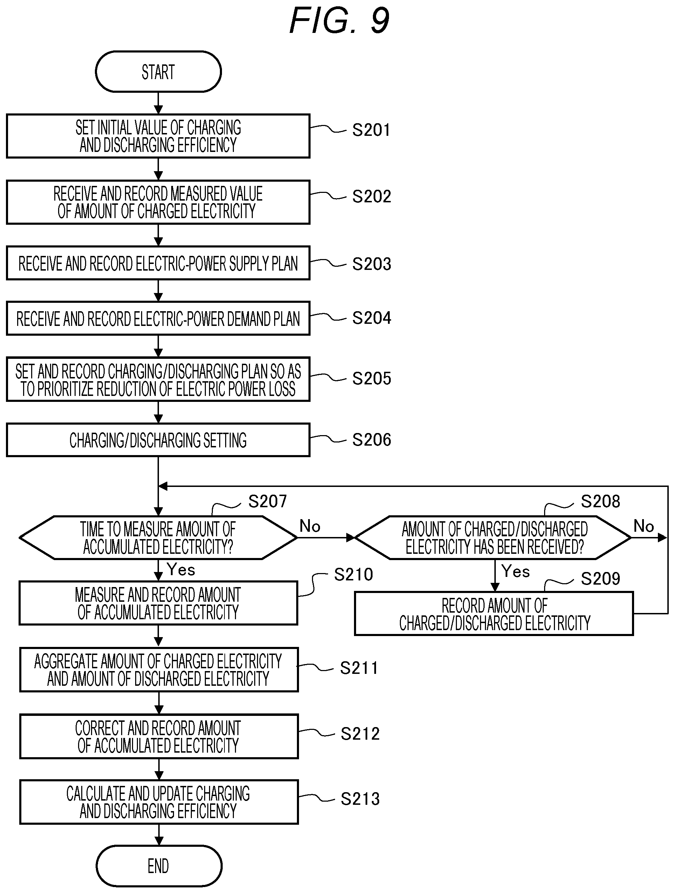

FIG. 9 is a flowchart regarding processes in the electric-power management administration device (see also FIG. 1 as appropriate).

Incidentally, a series of processes illustrated in FIG. 9 is executed by developing, in the main storage device 73, the program 74a in the auxiliary storage device 74, by the processor 71 (see FIG. 2) in the electric-power management administration device 70.

In a step S201, the electric-power management administration device 70 receives settings of the initial values of the charging and discharging efficiencies of the first charging/discharging system 30 and the second charging/discharging system 40, and the like. As described above, the initial values of the charging and discharging efficiencies are set based on administrator's inputting manipulations.

In a step S202, the electric-power management administration device 70 receives the measured values of the amounts of charged electricity in the first charging/discharging system 30 and the second charging/discharging system 40, as the initial values, and records them in the distribution ledger system 80.

In a step S203, the electric-power management administration device 70 receives data of electric-power supply plans from the first electric-power supply system 10 and the second electric-power supply system 20, and records the data in the distribution ledger system 80.

In a step S204, the electric-power management administration device 70 receives data of electric-power demand plans from the first electric-power demand system 50 and the second electric-power demand system 60, and records the data in the distribution ledger system 80.

In a step S205, the electric-power management administration device 70 sets a charging/discharging plan (management plan), based on the electric-power supply plan and the electric-power demand plan, so as to prioritize reduction of electric power loss involved in charging and discharging. Then, the electric-power management administration device 70 records the plan in the distribution ledger system 80. In the example of FIG. 5, a charging/discharging plan with administration IDs of C1 to C4 is set.

In a step S206, the electric-power management administration device 70 performs charging/discharging settings. Namely, the electric-power management administration device 70 transmits data of the charging/discharging plan to the first charging/discharging system 30 and the second charging/discharging system 40.

In a step S207, the electric-power management administration device 70 determines whether or not the time has come to measure the amounts of accumulated electricity in the first charging/discharging system 30 and the second charging/discharging system 40. If the time has not come to measure the amounts of accumulated electricity (S207: No), the process in the electric-power management administration device 70 proceeds to a step S208.

In the step S208, the electric-power management administration device 70 determines whether or not it has received data of the amounts of charged/discharged electricity from the first charging/discharging system 30 and the second charging/discharging system 40. If it has not received data of the amounts of charged/discharged electricity (S208: No), the process in the electric-power management administration device 70 returns to the step S207.

If it has received data of the amounts of charged/discharged electricity in the step S208 (S208: Yes), the electric-power management administration device 70 records the amounts of charged/discharged electricity, in the distribution ledger system 80 (S209). Further, in step S207, if the time has come to measure the amounts of accumulated electricity (S207: Yes), the process in the electric-power management administration device 70 proceeds to a step S210.

In a step S210, the electric-power management administration device 70 acquires data of the amounts of accumulated electricity from the first charging/discharging system 30 and the second charging/discharging system 40 and records the data in the distribution ledger system 80.

In a step S211, the electric-power management administration device 70 aggregates the amounts of charged electricity and the amounts of discharged electricity, for each charging/discharging system and for each electric power type.

Next, in a step S212, the electric-power management administration device 70 corrects the amount of accumulated electricity of each electric power type and records the corrected value in the distribution ledger system 80. The correction of the amount of accumulated electricity is the same as that in the step S148 in FIG. 8C and is not described.

In a step S213, the electric-power management administration device 70 calculates the charging and discharging efficiencies of the first charging/discharging system 30 and the second charging/discharging system 40 at the time of the latest measurement of the amounts of accumulated electricity and updates the values of their charging and discharging efficiencies therewith. After performing the process in the step S213, the electric-power management administration device 70 ends the series of processes (END). Incidentally, the series of processes illustrated in FIG. 9 is repeated in a predetermined manner based on a cycle of the electric-power management administration (for example, a cycle of one day or several days).

### < Effects >

According to the first embodiment, the electric-power management administration device 70 preferentially performs charging and discharging electricity into and from the first charging/discharging system 30 having a higher charging and discharging efficiency. This can reduce electric power losses accompanying charging and discharging, thereby achieving higher efficiency.

Further, the electric-power management administration device 70 preferentially allocates "first electric power " having a higher priority based on the electric power type (namely, the type of the electric-power generation scheme) to the first charging/discharging system 30 having a higher charging and discharging efficiency. This can reduce electric power losses for each electric power type designated by the electric-power management administration device 70. This enables preferentially reducing electric power losses accompanying charging and discharging of "first electric power" generated by renewable energy, for example.

Further, according to the first embodiment, with the electric-power management administration device 70, it is possible to administer the amounts of charged electricity, the amounts of discharged electricity, and the amounts of accumulated electricity of the respective electric power types in the first charging/discharging system 30 and the second charging/discharging system 40.

### Second Embodiment

The second embodiment is different from the first embodiment in that a charging/discharging plan is made so as to utilize, at a higher rate, electric power of a type with a higher priority. Incidentally, the structure of an electric-power management administration system 100 (see FIGs. 1 and 2), an electric-power supply plan (see FIG. 3) and an electric-power demand plan (see FIG. 4) are similar to those of the first embodiment. The second embodiment is the same as the first embodiment in that "first electric power" has a higher priority for improving the electric power efficiency than that of "second electric power", and in that a first charging/discharging system 30 has a higher charging and discharging efficiency than that of a second charging/discharging system 40. Therefore, the second embodiment will be described regarding its portions different from those of the first embodiment, and will not be described regarding its portions overlapping the first embodiment.

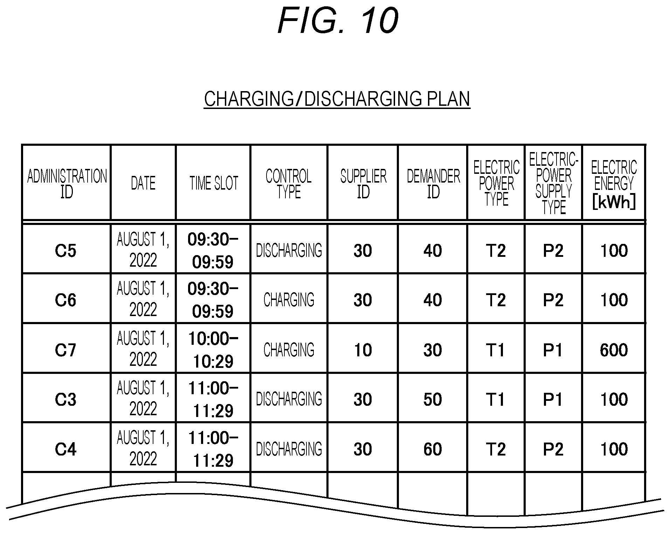

FIG. 10 is an explanatory diagram relating to a charging/discharging plan in an electric-power management administration system according to the second embodiment (see also FIG. 1 as appropriate).

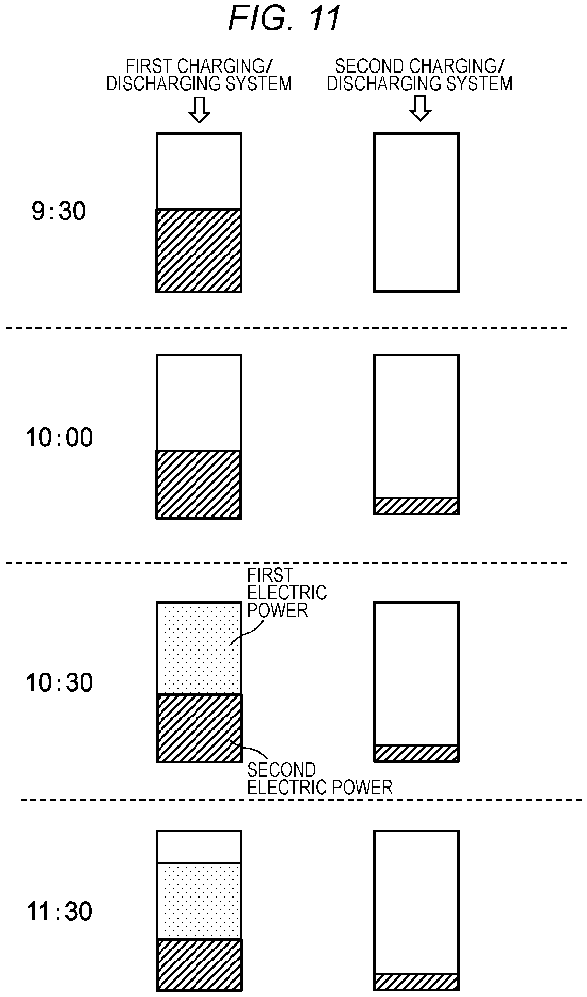

The charging/discharging plan illustrated in FIG. 10 is created by the electric-power management administration device 70, based on an electric-power supply plan (see FIG. 3) and an electric-power demand plan (see FIG. 4). Although not illustrated in FIG. 10, it is assumed that, at a time point of 9:30 on August 1, 2022, the first charging/discharging system 30 is charged with "second electric power" in an amount of 500 [kWh], while the amount of electricity accumulated in the second charging/discharging system 40 is 0 (see also FIG. 11).

As a charging/discharging plan with an Administration ID of "C5" in FIG. 10, there is made a plan for discharging "second electric power" of an electric power type T2 and an electric-power supply type P2 in an amount of 100 [kWh], from the first charging/discharging system 30, into the second charging/discharging system 40, in a time zone of 9:30 to 9:59 on August 1, 2022. This secures an empty region corresponding to an amount of 600 [kWh] in the first charging/discharging system 30. This enables accumulating all the electric energy of 600 [kWh] supplied from the first electric-power supply system 10 thereafter (administration ID: S1 in FIG. 3), into the first charging/discharging system 30. An administration ID of C6 illustrated in FIG. 10 relates to charging electricity into the second charging/discharging system 40, and corresponds to the discharging of electricity from the first charging/discharging system 30 as an administration ID of C5.

As a charging/discharging plan with an Administration ID of "C7" in FIG. 10, there is made a plan for charging "first electric power" of an electric power type T1 and an electric-power supply type P1 in an amount of 600 [kWh], from the first electric-power supply system 10, into the charging/discharging system 30, in a time zone of 10:00 to 10:29 on August 1, 2022. By maximally charging "first electric power" into the first charging/discharging system 30 having a higher charging and discharging efficiency, as described above, it is possible to promote utilization of "first electric power", and further it is possible to reduce electric power losses involved in charging/discharging. The charging/discharging plan (supplies to demanders) with administration IDs of C3 and C4 in FIG. 10 is similar to that described in the first embodiment (see FIG. 5) and is not described.

FIG. 11 is an explanatory diagram regarding transitions of the amounts of electricity accumulated in the respective charging/discharging devices (see also FIG. 1 as appropriate).

The transitions of the amounts of accumulated electricity illustrated in FIG. 11 correspond to the charging/discharging plan (see FIG. 10), besides the electric-power supply plan (see FIG. 3) and the electric-power demand plan (see FIG. 4). It is assumed that the charging capacities of the first charging/discharging system 30 and the second charging/discharging system 40 are both 1000 [kWh]. In the example of FIG. 11, it is assumed that "second electric power" in an amount of 500 [kWh] has been accumulated in the first charging/discharging system 30 at a time point of 9:30.

As described above, in a time zone of 9:30-9:59 on August 1, 2022, "first electric power" in an amount of 100 [kWh] is discharged from the first charging/discharging system 30 to the second charging/discharging system 40 (administration ID: C5 in FIG. 10). This results in a state at "10: 00" in FIG. 11. This enables charging all "first electric power" in an amount of 600 [kWh] supplied from the first electric-power supply system 10 into the first charging/discharging system 30, thereafter (a state at "10: 30" in FIG. 11). Therefore, when the "first electric power" is charged, it is possible to utilize, at the maximum, the first charging/discharging system 30 having a higher charging and discharging efficiency. Incidentally, the state at "11: 30" which is resulted from charging/discharging with administration IDs of C3 and C4 in FIG. 10 is not described.

Next, there will be described charging/discharging control in the electric-power management administration system 100. The sequence in a charging/discharging preparation stage is the same as that of the first embodiment (see FIG. 8A), and is not described. Further, a sequence relating to correction of the amounts of charged/discharged electricity is also the same as that of the first embodiment (see FIG. 8C), and is not described.

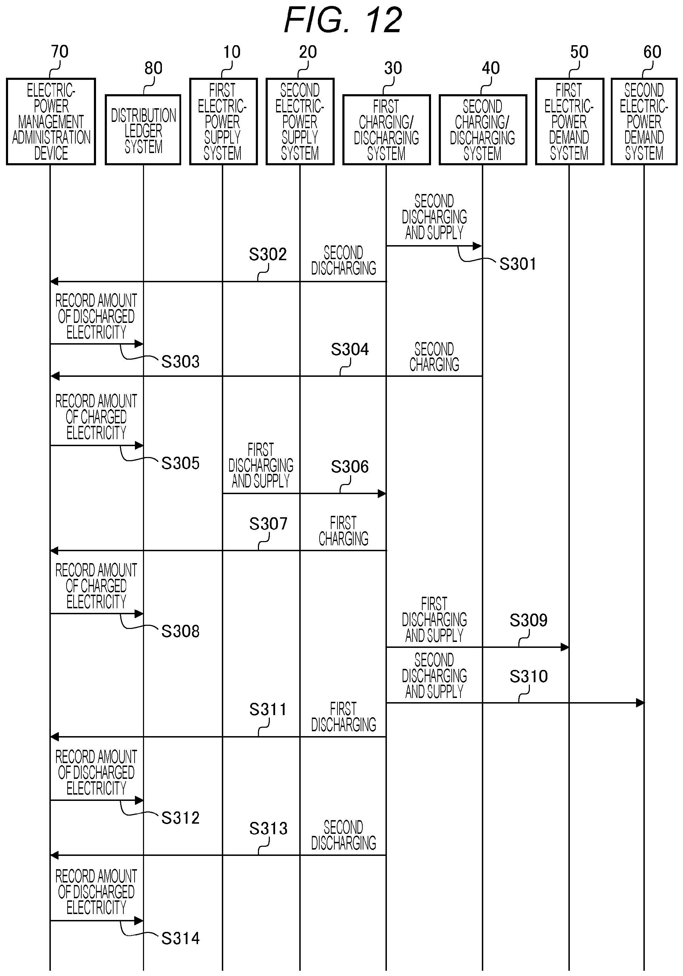

FIG. 12 is a sequence diagram relating to execution of charging/discharging in the electric-power management administration system (see also FIG. 1 as appropriate).

In a step S301 in FIG. 12, the first charging/discharging system 30 discharges "second electric power" to the second charging/discharging system 40 (described as "second discharging and supply" in FIG. 12). In the example of FIG. 10, "second electric power" in an amount of 100 [kWh] is discharged from the first charging/discharging system 30 to the second charging/discharging system 40 in a time zone of 9:30 to 9:59 on August 1, 2022.

In a step S302, the first charging/discharging system 30 notifies the electric-power management administration device 70 of a measured value of the amount of discharged "second electric power". In a step S303, the electric-power management administration device 70 records, in a distribution ledger system 80, data of the amount of discharged electricity having been received from the first charging/discharging system 30. In a step S304, the second charging/discharging system 40 notifies the electric-power management administration device 70 of a measured value of the amount of charged "second electric power". In a step S305, the electric-power management administration device 70 records, in the distribution ledger system 80, data of the amount of charged electricity having been received from the second charging/discharging system 40.

In a step S306, when a predetermined time based on the electric-power supply plan has come, the first electric-power supply system 10 supplies "first electric power" to the first charging/discharging system 30. In the example of FIG. 10, "first electric power" in an amount of 600 [kWh] is supplied from the first electric-power supply system 10 to the first charging/discharging system 30 in a time zone of 10:00 to 10:29 on August 1, 2022.

In a step S307, the first charging/discharging system 30 notifies the electric-power management administration device 70 of a measured value of the amount of charged "first electric power". In a step S308, the electric-power management administration device 70 records, in the distribution ledger system 80, the amount of charged "first electric power" having been received from the first charging/discharging system 30. Incidentally, steps S309 to S314 in FIG. 12 in this order are the same as the processes in the steps S127 to S132 (see FIG. 8B) according to the first embodiment, and are not described.

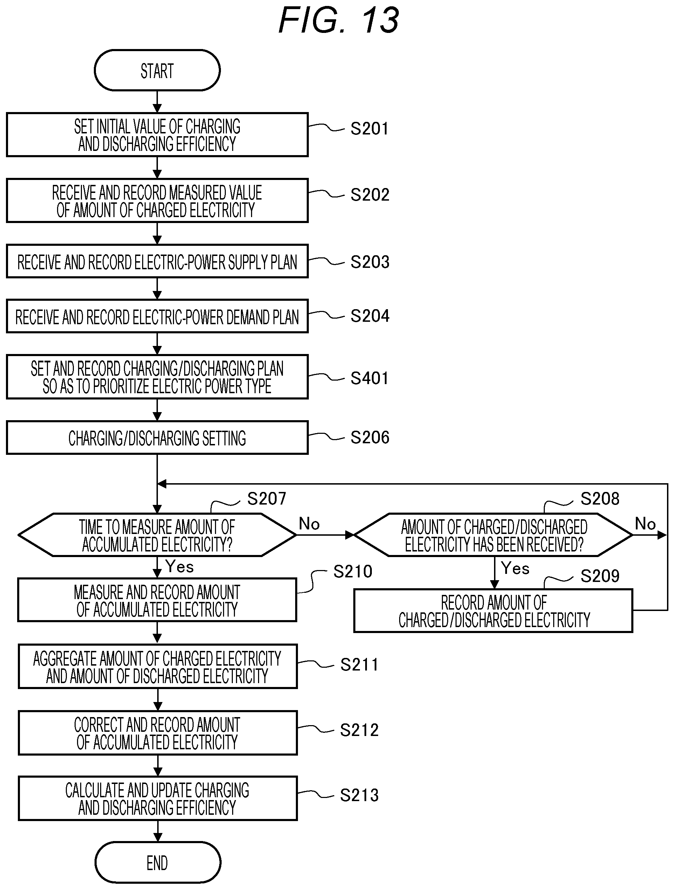

FIG. 13 is a flowchart regarding processes in the electric-power management administration device (see also FIG. 1 as appropriate).

Incidentally, processes in steps S201 to S204 illustrated in FIG. 13 are the same as those of the first embodiment (see FIG. 9), and are not described. In the step S204, the electric-power management administration device 70 receives data of electric-power demand plans from the first electric-power demand system 50 and the second electric-power demand system 60, and records the data in the distribution ledger system 80. Thereafter, the process in the electric-power management administration device 70 proceeds to a step S401.

In the step S401, the electric-power management administration device 70 sets a charging/discharging plan in an electric-power type prioritization manner, and records the charging/discharging plan in the distribution ledger system 80. In the second embodiment, the charging/discharging plan is created in such a way as to reduce electric power losses involved in charging/discharging "first electric power" having a higher priority for improving the electric power efficiency. Namely, the electric-power management administration device 70 charges electric power having a higher priority, out of electric power supplied from the first electric-power supply system 10 and electric power supplied from the second electric-power supply system 20, into the charging/discharging system having a higher charging and discharging efficiency (charging/discharging efficiency) out of the first charging/discharging system 30 and the second charging/discharging system 40.

Specifically, when charging a predetermined electric energy from the first electric-power supply system 10 into the first charging/discharging system 30, the electric-power management administration device 70 causes the first charging/discharging system 30 to discharge electricity to the second charging/discharging system 40, so as to provide an empty region corresponding to the predetermined electric energy in the first charging/discharging system 30 (the state at "10: 00" in FIG. 6). This enables charging all "first electric power" into the first charging/discharging system 30 having a higher charging and discharging efficiency, thereafter (the state at "10: 30" in FIG. 6). This can minimize the electric power loss involved in charging/discharging "first electric power", which enables managing "first electric power" with higher efficiency.

After the process in the step S401 is performed, the process in the electric-power management administration device 70 proceeds to a step S206. The respective processes in the steps S206 to S213 are the same as those of the first embodiment (see FIG. 9), and are not described.

### < Effects >

According to the second embodiment, "first electric power" is preferentially charged into the first charging/discharging system 30 having a higher charging and discharging efficiency, which can reduce losses of "first electric power" involved in charging/discharging. This enables efficiently managing "first electric power", thereby promoting use of "first electric power". Further, movement of electric power from the first charging/discharging system 30 to the second charging/discharging system 40 is allowed. This enables maximally utilizing the first charging/discharging system 30 having a higher charging and discharging efficiency as a system to be charged with "first electric power".

### Third Embodiment

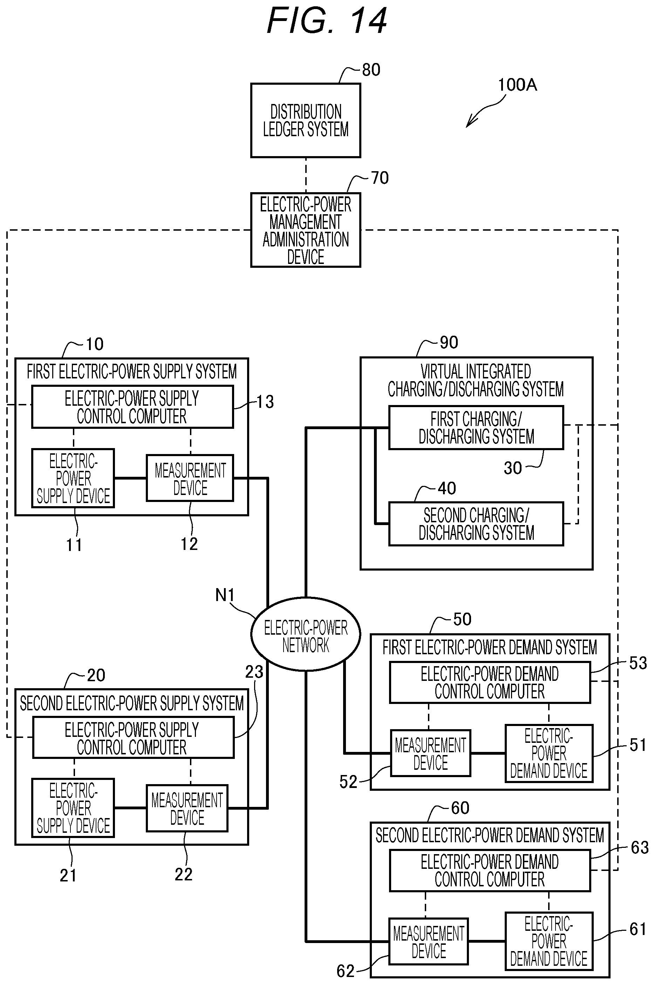

The third embodiment is different from the first embodiment in that a first charging/discharging system 30 (see FIG. 14) and a second charging/discharging system 40 (see FIG. 14) are administered in such a way as to be virtually integrated as a virtual integrated administration system 90 (see FIG. 14). Further, the third embodiment is different from the first embodiment in method for calculating the amounts of charged/discharged electricity of respective electric-power types. In an electric-power management administration system 100A (see FIG. 14), the respective structures other than the virtual integrated administration system 90 (see FIG. 14) are the same as those of the first embodiment. Therefore, the second embodiment will be described regarding its portions different from those of the first embodiment, and will not be described regarding its portions overlapping the first embodiment.

FIG. 14 is a functional block diagram of the electric-power management administration system 100A according to the third embodiment.

As illustrated in FIG. 14, the electric-power management administration system 100A includes the virtual integrated administration system 90. The virtual integrated administration system 90 is a system for enabling an electric-power management administration device 70 to administer the first charging/discharging system 30 and the second charging/discharging system 40 in such a way as to virtually integrate them. The virtual integrated administration system 90 includes the first charging/discharging system 30 and the second charging/discharging system 40.

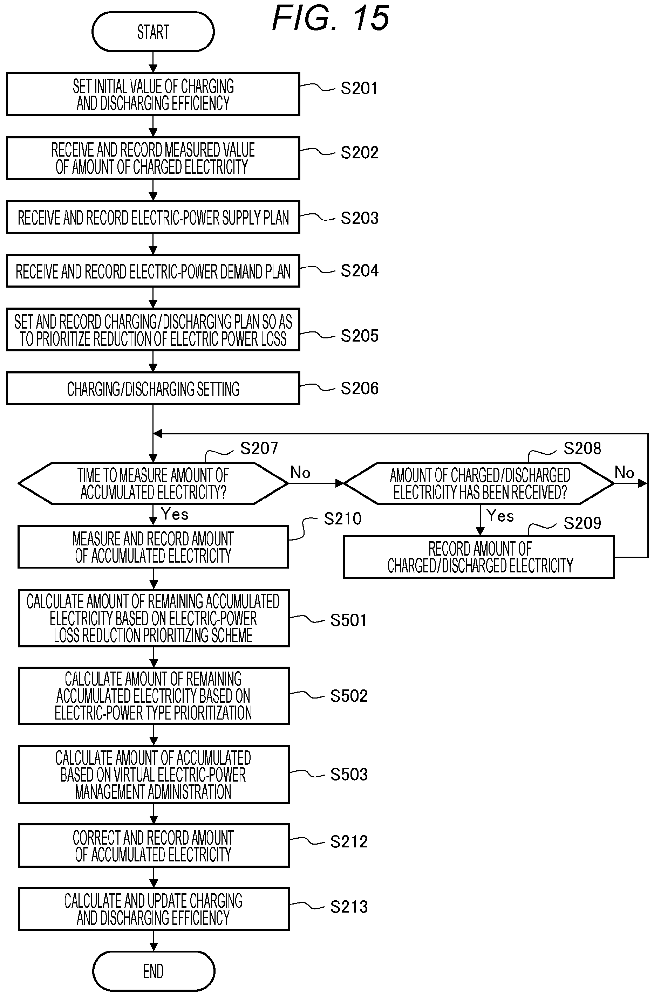

In an example of the third embodiment, in managing actual electric power (physical electric power), electric power is administered based on the scheme according to the first embodiment (which will be referred to as an electric-power loss reduction prioritizing scheme, hereinafter). On the other hand, in managing electric power (virtual electric power) in calculating the amounts of accumulated electricity of respective electric-power types, electric power is administered based on the scheme according to the second embodiment (which will be referred to as an electric-power supply type prioritizing scheme, hereinafter). Such processes will be described with reference to a flowchart of FIG. 15.

FIG. 15 is a flowchart relating to processes in the electric-power management administration device (see also FIG. 14 as appropriate).

Incidentally, respective processes in steps S212 and S213 in addition to steps S201 to S210 illustrated in FIG. 15 are the same as those of the first embodiment (see FIG. 9), and are not described.

In the step S210, the electric-power management administration device receives data of the amounts of accumulated electricity from the first charging/discharging system 30 and the second charging/discharging system 40, and records the data in a distribution ledger system 80. Thereafter, the process in the electric-power management administration device 70 proceeds to a step S501.

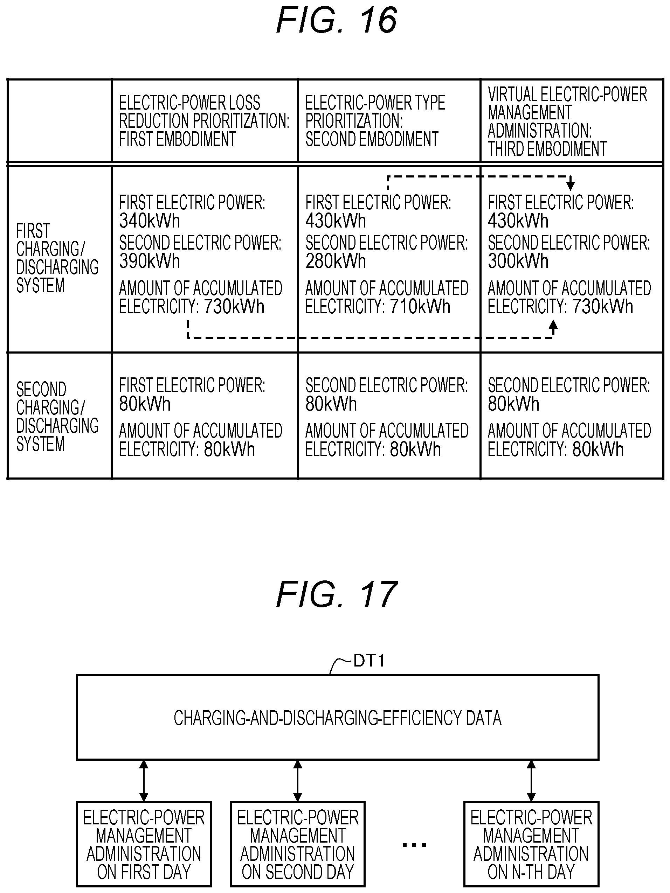

In the step S501, the electric-power management administration device 70 calculates the amounts of accumulated electricity of the respective electric-power types, out of the remaining electric power, based on the electric-power loss reduction prioritizing scheme which is the same as that of the first embodiment. "The amounts of accumulated electricity" calculated in the step S501 are values obtained in consideration of electric power losses involved in charging and discharging (logical amounts of accumulated electricity). Here, the respective amounts of accumulated electricity will be described with reference to FIG. 16.

FIG. 16 is an explanatory diagram regarding the amounts of accumulated electricity in the first charging/discharging system and the second charging/discharging system (see also FIG. 14 as appropriate).

In a column of "electric-power loss reduction prioritization" in FIG. 16, there are illustrated respective amounts of accumulated electricity, in a case of performing management administration based on the electric-power loss reduction prioritizing scheme similar to that of the first embodiment. Further, "electric-power loss reduction prioritizing scheme" is a scheme for preferentially charging or discharging electricity into or from a charging/discharging system having a higher charging and discharging efficiency, out of the first charging/discharging system 30 and the second charging/discharging system 40, as described in the first embodiment.

In a column of "electric-power type prioritization" in FIG. 16, there are illustrated respective amounts of accumulated electricity, in a case of performing management administration based on the electric-power type prioritizing scheme similar to that of the second embodiment. "The electric-power type prioritizing scheme" is a scheme for charging electric power with a higher priority, out of electric power supplied from the first electric-power supply system 10 and the second electric-power supply system 20, into a charging/discharging system with a higher charging and discharging efficiency, out of the first charging/discharging system 30 and the second charging/discharging system 40, as described in the second embodiment.

In a column of "virtual electric-power management administration" illustrated in FIG. 16, there are illustrated respective amounts of accumulated electricity, based on the virtual electric-power management administration according to the third embodiment.

In the example of FIG. 16, the amount of accumulated "first electric power" in the first charging/discharging system 30 is 340 [kWh], and the amount of accumulated" second electric power" therein is 390 [kWh], as the result of the calculation in the step S501 of FIG. 15 (see the column of "electric-power loss reduction prioritizing scheme"). The procedure of calculating these respective values is the same as that described in the first embodiment. Therefore, the sum amount of accumulated electricity in the second charging/discharging system 30 is 730 [kWh].

In the second charging/discharging system 40, the amount of accumulated "first electric power" is 80 [kWh]. The amount of accumulated "second electric power" is 0 [kWh]. Therefore, the sum amount of accumulated electricity in the second charging/discharging system 40 is 80 [kWh]. Incidentally, the amount of accumulated electricity (730 [kWh]) in the first charging/discharging system 30, and the amount of accumulated electricity (80 [kWh]) in the second charging/discharging system 40 in the case of the electric-power loss reduction prioritizing scheme are referred to as "first amounts of accumulated electricity".

The electric-power management administration device 70 calculates the respective amounts of accumulated electricity corresponding to the electric-power generation schemes (namely, corresponding to "first electric power" and "second electric power"), out of the first amounts of accumulated electricity remaining in the respective charging/discharging systems, in the case of performing the electric-power loss reduction prioritizing scheme.

In a step S502 of FIG. 15, the electric-power management administration device 70 calculates the amounts of accumulated electricity of the respective electric-power types, out of the remaining electric power, in the case of performing electric-power management based on an electric-power type prioritizing scheme similar to that of the second embodiment. Incidentally, the amounts of accumulated electricity calculated in the step S502 are also values obtained in consideration of electric power losses involved in charging and discharging.

In the example of FIG. 16, the amount of accumulated "first electric power" in the first charging/discharging system 30 is 430 [kWh], and the amount of accumulated" second electric power" therein is 280 [kWh], as the result of the calculation in the step S502 of FIG. 15 (see the column of "electric-power type prioritizing scheme"). Therefore, the sum amount of accumulated electricity in the first charging/discharging system 30 is 710 [kWh].

In the second charging/discharging system 40, the amount of accumulated "first electric power" is 80 [kWh]. On the other hand, the amount of accumulated "second electric power" is 0 [kWh]. Therefore, the sum amount of accumulated electricity in the second charging/discharging system 40 is 80 [kWh]. Incidentally, the amount of accumulated electricity (710 [kWh]) in the first charging/discharging system 30, and the amount of accumulated electricity (80 [kWh]) in the second charging/discharging system 40 in the case of the electric-power type prioritizing scheme are referred to as "second amounts of accumulated electricity".

The electric-power management administration device 70 calculates the respective amounts of accumulated electricity corresponding to the electric-power generation schemes (namely, corresponding to "first electric power" and "second electric power"), out of the second amounts of accumulated electricity remaining in the respective charging/discharging systems, in the case of performing the electric-power type prioritizing scheme.

In a step S503 of FIG. 15, the electric-power management administration device 70 calculates the amounts of accumulated electricity of the respective electric-power types, based on the virtual electric-power management administration. First, as a breakdown of the amount of accumulated electricity in each of the first charging/discharging system 30 and the second charging/discharging system 40, the electric-power management administration device 70 allocates "the second amount of accumulated electricity" as the amount of accumulated electricity corresponding to an electric-power generation scheme with a higher priority (namely, "first electric power"). In the example of FIG. 16, according to the electric-power type prioritizing scheme, the amount of accumulated "first electric power" having a higher priority is 430 [kWh]. The value of 430 [kWh] is used as the amount of accumulated "first electric power" for the virtual electric-power management administration.

Further, the electric-power management administration device 70 allocates the value obtained by subtracting the sum of the allocated "second amounts of accumulated electricity" from the total sum of "first amounts of accumulated electricity" as the amount of accumulated electricity corresponding to an electric-power generation scheme with a lower priority (namely, "second electric power"). Namely, in order that the sum of the amounts of accumulated electricity is made to be 730 [kWh], the electric-power management administration device 70 calculates the amount of accumulated "second electric power" (300 [kWh]), by subtracting the amount of accumulated "first electric power" (430 [kWh]) based on the electric-power type prioritizing scheme from the total sum of the amounts of accumulated electricity (730 [kWh]) based on the electric-power loss reduction prioritizing scheme.

As described above, the actual electric power (physical electric power) is managed based on the electric-power loss reduction prioritizing scheme and, therefore, the total amount of accumulated electricity is 730 [kWh]. However, the amounts of accumulated electricity of the respective electric-power types are calculated by virtually using the electric-power type prioritizing scheme. This can increase the rate of utilization of "first electric power" with a relatively higher priority, while reducing electric power losses of each of "first electric power" and "second electric power". In the second charging/discharging system 40, there is no difference in amount of accumulated electricity between the electric-power loss reduction scheme and the electric-power type prioritizing scheme, and, therefore, the amount of accumulated "second electric power" is 80 [kWh].

After the process in the step S503 in FIG. 15 is performed, processes in steps S212 and S213 are sequentially performed. Incidentally, the processes in the steps S212 and S213 are the same as those in the first embodiment (see FIG. 9), and are not described.

### < Effects >

According to the third embodiment, the electric-power management administration device 70 performs actual charging/discharging of electric power based on the electric-power loss reduction prioritizing scheme, which can minimize electric power losses accompanying charging and discharging. Further, for example, the value (430 [kWh]) based on the electric-power type prioritizing scheme is allocated as an amount of accumulated electricity corresponding to "first electric power" having a higher priority, out of the amount of accumulated electricity in the first charging/discharging system 30. This can increase the rate of utilization of "first electric power". Further, the value (300 [kWh]) obtained by subtracting the amount of accumulated electricity corresponding to "first electric power" from the total amount of accumulated electricity is allocated as the amount of accumulated electricity corresponding to "second power" having a lower priority, out of the amount of accumulated electricity in the first charging/discharging system 30. As a result, the total sum of the calculated amounts of accumulated electricity can be matched with the total sum of the actual amounts of accumulated electricity.

### Fourth Embodiment

In the fourth embodiment, there will be described processes for updating the charging and discharging efficiencies by an electric-power management administration device 70. The structure and the like of an electric-power management administration system 100 (see FIG. 1) are the same as those of the first embodiment. Therefore, the second embodiment will be described regarding its portions different from those of the first embodiment, and will not be described regarding its portions overlapping the first embodiment.

FIG. 17 is an explanatory diagram regarding electric-power management administration during a plurality of days in the electric-power management administration system according to the fourth embodiment (see also FIG. 1 as appropriate).

Although not illustrated in FIG. 17, initial values of the charging and discharging efficiencies of a first charging/discharging system 30 and a second charging/discharging system 40 are inputted to the electric-power management administration device 70, based on administrator's inputting manipulations. The initial values of the charging and discharging efficiencies are stored as charging-and-discharging-efficiency data DT1 in the electric-power management administration device 70, in association with the first charging/discharging system 30 and the second charging/discharging system 40.

Then, the electric-power management administration device 70 performs management administration during the first day after initial settings or after the completion of maintenance. Thereafter, the electric-power management administration device 70 calculates the charging and discharging efficiencies at the time point of the end of the management administration, and updates the charging-and-discharging-efficiency data DT1. In actual, the charging and discharging efficiencies change from moment to moment. However, the values of the charging and discharging efficiencies at the end of the first day are used as average charging and discharging efficiencies in performing management administration on the next day, or the second day.

In starting the management administration on the second day, the electric-power management administration device 70 sets the values of the charging-and-discharging-efficiency data DT1 (the charging and discharging efficiencies at the end of the first day) as the charging and discharging efficiencies of the first charging/discharging system 30 and the second charging/discharging system 40. When the management administration on the second day has ended, the electric-power management administration device 70 calculates the charging and discharging efficiencies at the time point of the end of the management administration, and updates the charging-and-discharging-efficiency data DT1.

Similarly, in starting the management administration on the N-th day, the electric-power management administration device 70 sets the values of the charging-and-discharging-efficiency data DT1 (the charging and discharging efficiencies at the end of the (N-1)-th day) as the charging and discharging efficiencies of the first charging/discharging system 30 and the second charging/discharging system 40. When the management administration on the N-th day has ended, the electric-power management administration device 70 calculates the charging and discharging efficiencies at the time point of the end of the management administration, and updates the charging-and-discharging-efficiency data DT1.

As described above, the electric-power management administration device 70 calculates the respective charging and discharging efficiencies (charging/discharging efficiencies) of the first charging/discharging system 30 and the second charging/discharging system 40 during a first predetermined time period (for example, during a (N-1)-th day). Further, based on these charging and discharging efficiencies, the electric-power management administration device 70 performs electric-power management administration during a second predetermined time period (for example, during an N-th day) after the first predetermined time period. Incidentally, the lengths of "first predetermined time period" and "second predetermined time period" are not limited to one day, and may be shorter than one day, or may be several days or several weeks.

### < Effects >

According to the fourth embodiment, the electric-power management administration device 70 updates the charging/discharging-efficiency data at the end of the electric-power management administration on each day. This enables appropriately performing electric-power management administration, based on the latest charging and discharging efficiencies of the first charging/discharging system 30 and the second charging/discharging system 40.

### Examples of Modifications

Although the electric-power management administration system 100 according to the present invention has been described in the respective embodiments, the present invention is not limited to the descriptions, and various modifications can be made thereto.

For example, although, in each embodiment, there has been described a case where "first electric power" is electric power generated by renewable energy while "second electric power" is electric power generated by non-renewable energy, the present invention is not limited thereto. As another specific example, electric power generated by solar power generation may be made to be "first electric power", and electric power generated by wind power generation may be made to be "second electric power". Also, electric power generated by nuclear power generation may be made to be "first electric power", and electric power generated by thermal power generation may be made to be "second electric power". it is also possible to employ other various combinations.

Further, in each embodiment, there has been described a case where the number of "electric-power supply systems" is two (the first electric-power supply system 10 and the second electric-power supply system 20), but the number of "electric-power supply systems" may be three or more. It is assumed that a plurality of "electric-power supply systems" mixedly includes electric-power supply systems having different electric-power generation schemes. Incidentally, electric-power supply systems having the same electric-power generation scheme may be treated as having the same priority for improving electric-power efficiency, or may be given different priorities based on the identification information or the like.

For example, in the second embodiment, it is assumed that there are n pieces of electric power with different priorities, and there are m charging/discharging systems with different charging and discharging efficiencies. In this case, the electric-power management administration 70 may make a charging/discharging plan so as to charge electric power having a highest priority into the charging/discharging system having a highest charging and discharging efficiency at the maximum. Further, electric power having a second priority is preferentially charged into an empty region of a charging/discharging system having a higher charging and discharging efficiency, out of the m charging/discharging systems, for example. The same applies to electric power having the third or lower priority.

In each embodiment, there has been described a case where the number of "charging/discharging systems" is two (the first charging/discharging system 30 and the charging/discharging system 40). However, the number of "charging/discharging systems" may be three or more. It is assumed that a plurality of "charging/discharging systems" mixedly includes charging/discharging systems having different charging and discharging efficiencies (charging/discharging efficiencies).

For example, in the first embodiment, when there are n "charging/discharging systems" having different charging and discharging efficiencies, electricity may be preferentially charged and discharged into and from a charging/discharging system with a highest charging and discharging efficiency and, subsequently, electricity may be charged and discharged into and from charging/discharging systems with a second highest charging and discharging efficiency, a third highest charging and discharging efficiency, •••, in this order.

In each embodiment, there has been described a case where the number of "electric-power demand systems" is two (the first electric-power demand system 50 and the second electric-power demand system 60). However, the number of "electric-power demand systems" may be one or three or more. Namely, at least one "electric-power demand system" is required to be connected to the electric-power network N1.

Further, the respective embodiments can be appropriately combined. For example, in a predetermined time period, the electric-power management administration device 70 may perform the electric-power loss reduction prioritizing scheme based on the first embodiment, and, in another time period after the aforementioned predetermined time period, the electric-power management administration device 70 may perform the electric-power type prioritizing scheme based on the second embodiment (the order may be reversed). Also, the electric-power loss reduction prioritizing scheme, and the electric-power type prioritizing scheme may be performed temporally alternately.

Further, for example, the electric-power management administration device 70 may perform the electric-power loss reduction prioritizing scheme based on the first embodiment in a predetermined area, and may perform the electric-power type prioritizing scheme based on the second embodiment in another area.

Further, each embodiment may be applied to a battery energy storage system (BESS), in order to perform administration of amounts of accumulated electricity based on electric power types.

Further, programs (programs for electric-power management administration methods and the like) to be executed by the electric-power management administration system 100 can be provided through a communication line or can be distributed by being written in recording mediums such as CD-ROMs.

Further, the respective embodiments have been described in detail, for the purpose of explaining the present invention in such a way as to facilitate understanding the present invention, and the present invention is not necessarily limited to structures including all the described structures. Further, a structure according to each embodiment may be partially eliminated, provided with other additional structures or replaced with other structures. Further, there have been illustrated mechanisms and structures considered to be necessary for description, and not all the mechanisms and the structures in the product are illustrated.

### Reference Signs List

- 10: first electric-power supply system (electric-power supply system)
- 20: second electric-power supply system (electric-power supply system)
- 30: first charging/discharging system (charging/discharging system)
- 40: second charging/discharging system (charging/discharging system)
- 50: first electric-power demand system (electric-power demand system)
- 60: second electric-power demand system (electric-power demand system)
- 70: electric-power management administration device
- 80: distribution ledger system
- 90: virtual integrated administration system
- 100, 100A: electric-power management administration system
- N1: electric-power network

## Claims

1. An electric-power management administration system comprising an electric-power management administration device adapted to administer charging/discharging of a plurality of charging/discharging systems,
wherein the plurality of charging/discharging systems is each connected to a plurality of electric-power supply systems through an electric-power network and is each connected to at least one electric-power demand system,
the plurality of charging/discharging systems includes charging/discharging systems having different charging/discharging efficiencies,
the plurality of electric-power supply systems includes electric-power supply systems having different electric-power generation schemes, and
the electric-power management administration device sets a charging/discharging plan for the plurality of charging/discharging systems, based on the charging/discharging efficiencies, and based on priorities for improving electric-power efficiency, which are associated with the electric-power generation schemes.

2. The electric-power management administration system according to claim 1, wherein
the electric-power management administration device preferentially charges or discharges electricity into or from a charging/discharging system having a higher charging/discharging efficiency, out of the plurality of charging/discharging systems.

3. The electric-power management administration system according to claim 1, wherein
the plurality of charging/discharging systems includes a first charging/discharging system, and a second charging/discharging system having a lower charging/discharging efficiency than that of the first charging/discharging system,
the plurality of electric-power supply systems includes a first electric-power supply system, and a second electric-power supply system having a different electric-power generation scheme from that of the first electric-power supply system,
the electric-power generation scheme of the first electric-power supply system has a higher priority than that of the electric-power generation scheme of the second electric-power supply system, and
when a predetermined electric energy from the first electric-power supply system is charged, the electric-power management administration device charges an electric energy into an empty region of the first charging/discharging system, and charges a surplus electric energy which cannot be charged into the empty region, into the second charging/discharging system.

4. The electric-power management administration system according to claim 1, wherein
the plurality of charging/discharging systems includes a first charging/discharging system, and a second charging/discharging system having a lower charging/discharging efficiency than that of the first charging/discharging system,
the plurality of electric-power supply systems includes a first electric-power supply system, and a second electric-power supply system having a different electric-power generation scheme from that of the first electric-power supply system,
the electric-power generation scheme of the first electric-power supply system has a higher priority than that of the electric-power generation scheme of the second electric-power supply system, and
when there is an overlap of a time zone in which electric power from the first electric-power supply system is charged, and a time zone in which electric power from the second electric-power supply system is charged, in an at least partial time zone, the electric-power management administration device charges the electric power from the first electric-power supply system into the first charging/discharging system and charges the electric power from the second electric-power supply system into the second charging/discharging system, in the at least partial time zone.

5. The electric-power management administration system according to claim 1, wherein
the electric-power management administration device charges electric power with a higher priority, out of electric power supplied from the plurality of electric-power supply systems, into a charging/discharging system with a higher charging/discharging efficiency, out of the plurality of charging/discharging systems.

6. The electric-power management administration system according to claim 1, wherein
the plurality of charging/discharging systems includes a first charging/discharging system, and a second charging/discharging system having a lower charging/discharging efficiency than that of the first charging/discharging system,
the plurality of electric-power supply systems includes a first electric-power supply system, and a second electric-power supply system having a different electric-power generation scheme from that of the first electric-power supply system,
the electric-power generation scheme of the first electric-power supply system has a higher priority than that of the electric-power generation scheme of the second electric-power supply system, and
when a predetermined electric energy from the first electric-power supply system is charged into the first charging/discharging system, the electric-power management administration device causes the first charging/discharging system to discharge electricity to the second charging/discharging system, so as to provide an empty region corresponding to the predetermined electric energy in the first charging/discharging system.

7. The electric-power management administration system according to claim 1, wherein
the electric-power management administration device calculates respective amounts of accumulated electricity corresponding to the electric-power generation schemes, out of first amounts of accumulated electricity remaining in the respective charging/discharging systems in a case of performing an electric-power loss reduction prioritizing scheme for preferentially charging or discharging electricity into or from a charging/discharging system with a higher charging/discharging efficiency,
the electric-power management administration device calculates respective amounts of accumulated electricity corresponding to the electric-power generation schemes, out of second amounts of accumulated electricity remaining in the respective charging/discharging systems in a case of performing an electric-power type prioritizing scheme for charging electric power with a higher priority, out of electric power supplied from the plurality of electric-power supply systems, into a charging/discharging system with a higher charging/discharging efficiency, out of the plurality of charging/discharging systems, and
the electric-power management administration device allocates the second amount of accumulated electricity as an amount of accumulated electricity corresponding to the electric-power generation scheme with a higher priority, and allocates a value obtained by subtracting a sum of the allocated second amounts of accumulated electricity from a total sum of the first amounts of accumulated electricity, as an amount of accumulated electricity corresponding to the electric-power generation scheme with a lower priority, as a breakdown of the amounts of accumulated electricity in the plurality of charging/discharging systems.

8. The electric-power management administration system according to claim 1, wherein
the electric-power management administration device calculates respective charging/discharging efficiencies of the plurality of charging/discharging systems in a first predetermined time period, and the electric-power management administration device performs electric-power management administration, based on the charging/discharging efficiencies, in a second predetermined time period after the first predetermined time period.

9. An electric-power management administration device for administering charging/discharging of a plurality of charging/discharging systems,
wherein
the plurality of charging/discharging systems is each connected to a plurality of electric-power supply systems through an electric-power network and is each connected to at least one electric-power demand system,
the plurality of charging/discharging systems includes charging/discharging systems having different charging/discharging efficiencies,
the plurality of electric-power supply systems includes electric-power supply systems having different electric-power generation schemes, and
the electric-power management administration device sets a charging/discharging plan for the plurality of charging/discharging systems, based on the charging/discharging efficiencies, and based on priorities for improving electric-power efficiency, which are associated with the electric-power generation schemes.

10. An electric-power management administration method for administering charging/discharging of a plurality of charging/discharging systems,
wherein
the plurality of charging/discharging systems is each connected to a plurality of electric-power supply systems through an electric-power network and is each connected to at least one electric-power demand system,
the plurality of charging/discharging systems includes charging/discharging systems having different charging/discharging efficiencies,
the plurality of electric-power supply systems includes electric-power supply systems having different electric-power generation schemes, and
the electric-power management administration method comprises setting a charging/discharging plan for the plurality of charging/discharging systems, based on the charging/discharging efficiencies, and based on priorities for improving electric-power efficiency, which are associated with the electric-power generation schemes.

11. An electric-power management administration system comprising an electric-power management administration device adapted to correct an amount of accumulated electricity in a charging/discharging system for each electric power type corresponding to an electric-power generation scheme of an electric-power supply source,
wherein the electric-power management administration device corrects the amount of accumulated electricity in the charging/discharging system, for each electric-power type, based on an initial value of the amount of accumulated electricity of each electric-power type in the charging/discharging system, an aggregated value of an amount of charged electricity and an amount of discharged electricity of each electric-power type in a predetermined time period, and a measured value of the amount of accumulated electricity acquired at a predetermined measurement time.

12. The electric-power management administration system according to claim 11, wherein the electric-power management administration device records a corrected amount of accumulated electricity of each electric-power type, in a distribution ledger system.

13. The electric-power management administration system according to claim 11, wherein the electric-power management administration device allocates an electric power loss due to charging/discharging to respective electric-power types, based on a rate of an amount of charged/discharged electricity of each electric-power type to a total amount of electricity charged/discharged in the predetermined time period and, further, subtracts the electric power loss resulted from the allocation from a provisional amount of accumulated electricity of each electric-power type, thereby calculating a corrected amount of accumulated electricity of each electric-power type,
the provisional amount of accumulated electricity of each electric-power type is calculated by adding an aggregated value of the amount of charged electricity of each electric-power type to the initial value of the amount of accumulated electricity of each electric-power type in the charging/discharging system and, then, subtracting an aggregated value of the amount of discharged electricity of each electric-power type,
and
the electric power loss before being allocated is calculated by subtracting the measured value of the amount of accumulated electricity from a total sum of the provisional amounts of accumulated electricity of the respective electric-power types.

14. The electric-power management administration system according to claim 11, wherein, based on an average value of a charging/discharging efficiency in a first predetermined time period, the electric-power management administration device performs electric-power management administration in a second predetermined time period after the first predetermined time period.
